# EUROPEAN PATENT SPECIFICATION

(11) **EP 3 712 636 B1**
(45) Date of publication and mention of the grant of the patent: **15.03.2023**
(21) Application number: 19164063.0
(22) Date of filing: 20.03.2019
(51) Int. Cl.: G01S 5/02

(54) **MULTIPATH DETECTION FOR POSITIONING**
MEHRWEGEDETEKTION ZUR POSITIONIERUNG
DÉTECTION DE TRAJETS MULTIPLES POUR LE POSITIONNEMENT

(43) Date of publication of application: 23.09.2020
(73) Proprietor: HERE Global B.V., 5611 ZT Eindhoven (NL)
(72) Inventor: NURMINEN, Henri Jaakko Julius, 33100 Tampere (FI); IVANOV, Pavel, 33100 Tampere (FI); WIROLA, Lauri Aarne Johannes, 33100 Tampere (FI)
(74) Representative: Cohausz & Florack

(56) References cited:
- EP-A2- 2 650 693
- US-A1- 2016 033 617
- US-A1- 2018 098 196

## Description

### FIELD

The following disclosure relates to the field of indoor positioning, or more particularly relates to systems, apparatuses, and methods for enhancing positioning accuracy.

### BACKGROUND

Indoor positioning requires novel systems and solutions that are specifically developed for this purpose. The traditional positioning technologies, which are mainly used outdoors, i.e. satellite and cellular positioning technologies, cannot deliver such performance indoors that would enable seamless and equal navigation experience in both environments. The required positioning accuracy (2-3 m), coverage (~100 %) and floor detection are challenging to achieve with satisfactory performance levels with the systems and signals simply do not penetrate through the walls and roofs for adequate signal reception and the cellular signals have too narrow bandwidth for accurate ranging by default.

Several indoor-dedicated solutions have been developed and commercially deployed during the past years e.g. solutions based on pseudolites (GPS-like short range beacons), ultra-sound positioning, BLE (Bluetooth Low Energy) signals (e.g. High Accuracy Indoor Positioning (HAIP)), and WiFi fingerprinting. What is typical to these solutions is that they require either deployment of totally new infrastructure (beacons, tags and so on) or manual exhaustive radiosurveying of buildings including all the floors, spaces and rooms. This is rather expensive and will take a considerable amount of time to build the coverage to the commercial expected level, which in some cases narrowed the potential market segment only to very thin customer base e.g. for health care or dedicated enterprise solutions. Also, the diversity of these technologies makes it difficult to build a globally scalable indoor positioning solution, and the integration and testing will become complex if a large number of technologies needs to be supported in the consumer devices, such as smartphones.

For an indoor positioning solution to be commercially successful, that is 1) being globally scalable, 2) having low maintenance and deployment costs, and 3) offering acceptable end-user experience, the solution needs to be based on an existing infrastructure in the buildings and on existing capabilities in the consumer devices. This leads to an evident conclusion that the indoor positioning needs to be based on WiFi- and/or Bluetooth (BT)-technologies that are already supported in almost every smartphone, tablet, laptop and even in the majority of the feature phones. It is, thus, required to find a solution that uses the WiFi- and BT-radio signals in such a way that makes it possible to achieve 2-3 m horizontal positioning accuracy, close to 100 % floor detection with the ability to quickly build the global coverage for this approach.

A novel approach for radio-based indoor positioning that models e.g. the WiFi-radio environment (or any similar radio e.g. Bluetooth) from observed received signal strength (RSS-) measurements as two-dimensional radio maps is hereby able to capture the dynamics of the indoor radio propagation environment in a compressable and highly accurate way. This makes it possible to achieve unprecedented horizontal positioning accuracy with the WiFi-signals only within the coverage of the created radio maps and also gives highly reliable floor detection.

Huge volumes of indoor WiFi-measurements data could be harvested via crowd-sourcing if the consumer devices were equipped with the necessary functionality to enable the WiFi-data collection, e.g. as a background process, naturally with the end-user consent. It could also be possible to use volunteers to survey the sites (e.g. buildings) in exchange of reward or recognition and get the coverage climbing up globally in the places and venues important for the key customers. However, the technical challenges related to the harvesting, processing, redundancy, ambiguity and storing of the crowd-sourced data need to be understood and solved first, before the WiFi radio map creation can be based on the fully crowd-sourced data.

In addition to the signal strength information, the new WiFi standards will support Round-Trip-Time (RTT) measurement to support indoor positioning. The RTT principle enables a device to send a message e.g. to an access point. The access point responds after a delay with an acknowledgement message carrying the "processing delay", i.e. information indicative of the time between the receiving of the message by the access point and the access point responding to the acknowledgement message. The distance between the device and the access point may then for instance be determinable.

Although the time-based methods, such as RTT, can provide accurate information on the distance between the device and the access point, RTT suffers from several shortcomings, such as:
- clock stability -the clock of the device (e.g. a sending station) must be very stable to get high accuracy time difference, and thus distance, measurements;
- congestion - sending acknowledgement messages utilizes radio resources. If there are a lot of devices, radio resource availability may become a bottleneck;
- processing delay accuracy - the uncertainty in measuring the processing delay by the access point (e.g. a receiving station) is directly reflected in the quality of the RTT measurement;
- access point location accuracy - the uncertainty in the access point location is reflected in the positioning uncertainty and accuracy; and
- multipath and reflections - signals bouncing from the structures, such as walls, result in high-noise measurements or, in the worst case, result in too high distance estimates (reflected path is always longer than the direct path, but the system can only assume a direct path).

EP 2 650 693 A2 discloses a positioning method, device and system, which are applied to indoor WLAN positioning. A positioning server obtains location service information of APs in a set of APs to be measured; selects three APs to be measured in the set of APs to be measured according to a preset rule, and calculates a first coordinate of a terminal; obtains a calculated RSSI value of any unmeasured AP in the three APs to be measured at the first coordinate according to a preset propagation model signal graph; determines that signals of the unmeasured AP are not affected by reflection if the calculated RSSI value of the unmeasured AP is not smaller than a difference between the measured RSSI value and a preset threshold, and determines, according to the identifiers of the APs, whether all the three APs to be measured have been measured; and uses the first coordinate as a location coordinate of the. terminal if all the three APs to be measured have been measured, thereby positioning the terminal.

US 2016/0033617 A1 discloses a system, apparatus, and method for location estimation in the presence of multipath/non-line-of-sight (NLOS) conditions. Various methods have been contemplated to detect the level of multipath/NLOS propagation between two devices. A SNR variation method determines how the SNR of each chain/stream is varying over a time window in order to detect the chain/stream with least local scattering or multipath. A measure of coherence SNR is defined to measure the level of multipath/N LOS per-chain/ stream. Moreover, since per-subcarrier SNR information is available at the one or both nodes, the coherence methods can be used on a per-subcarrier basis to detect multipath/NLOS for the entire channel, for the specific spatial stream or for the specific frequencies occupied by the subcarriers. Further- more, a coherence bandwidth estimation method uses the SNR variation over subcarriers to detect the coherence band- width of the spatial stream. The amount of multipath/NLOS is inversely proportional to the coherence bandwidth.

US 2018/0098196 A1 discloses embodiments for harvesting and serving labels for locations. In an embodiment, a method comprises: receiving, by one or more server computers, location data including wireless access point data and location labels associated with significant locations, the location data being harvested from a plurality of devices operating at a plurality of geographic locations; and updating, by the one or more server computers, a plurality of fingerprints representing the plurality of geographic locations, the updating including associating at least one of the received location labels with at least one of the plurality of fingerprints.

### SUMMARY OF SOME EXEMPLARY EMBODIMENTS

However, RTT-based methods suffer from multipath and reflections. They are mitigated using statistical methods that are based on the instantaneous received signal structure (in the best case) and/or cross-validations of the RTT measurements against each other.

It is thus, inter alia, an object of the present invention to enable (e.g. providing means) mitigation of the impact of multipath and/or reflections in RTT-based positioning methods.

According to a first exemplary aspect of the present invention, a method is disclosed, the method comprising:
- determining one or more signal strength directional derivative fields for each respective radio node of one or more radio nodes, wherein a respective signal strength directional derivative field is determined at least partially based on one or more pieces of fingerprint information indicative of one or more radio signals sent by one or more radio nodes that are observable at a location at which the respective fingerprint information of the one or more pieces of fingerprint information was gathered, wherein each respective signal strength directional derivative field of the one or more signal strength directional derivative fields is indicative of enabling to determine if one or more signals transmitted between a respective radio node of the one or more radio nodes and at least one mobile device are reflected and/or propagated by multipath; and
- storing the one or more signal strength directional derivative fields; and/or
- providing the one or more signal strength directional derivative fields.

This method may for instance be performed by an apparatus, for instance a server.

Alternatively, this method may be performed by more than one apparatus, for instance a server cloud comprising at least two servers. For instance, the method may be performed by using at least one processor of the server or the server cloud. The method may be performed by a module or component executed by such as server or server cloud

According to a further exemplary aspect, a computer program is disclosed, the computer program when executed by a processor causing an apparatus, for instance a server or a server cloud, to perform the actions of the method according to the first exemplary aspect of the present invention.

The computer program may be stored on computer-readable storage medium, in particular a tangible and/or non-transitory medium. The computer readable storage medium could for example be a disk or a memory or the like. The computer program could be stored in the computer readable storage medium in the form of instructions encoding the computer-readable storage medium. The computer readable storage medium may be intended for taking part in the operation of a device, like an internal or external memory, for instance a Read-Only Memory (ROM) or hard disk of a computer, or be intended for distribution of the program, like an optical disc.

According to a further exemplary aspect of the invention, an apparatus is disclosed, configured to perform or comprising respective means for performing the method according to the first exemplary aspect.

The means of the apparatus can be implemented in hardware and/or software. They may comprise for instance at least one processor for executing computer program code for performing the required functions, at least one memory storing the program code, or both. Alternatively, they could comprise for instance circuitry that is designed to implement the required functions, for instance implemented in a chipset or a chip, like an integrated circuit. In general, the means may comprise for instance one or more processing means or processors.

According to a further exemplary aspect of the invention, an apparatus is disclosed, comprising at least one processor and at least one memory including computer program code, the at least one memory and the computer program code configured to, with the at least one processor, cause an apparatus, for instance the apparatus, at least to perform the method according to the first exemplary aspect.

The above-disclosed apparatus according to any aspect (e.g. the first exemplary aspect) of the invention may be a module or a component for a device, for example a chip. Alternatively, the disclosed apparatus according to any aspect of the invention may be a device, for instance a server or server cloud. The disclosed apparatus according to any aspect of the invention may comprise only the disclosed components, for instance means, processor, memory, or may further comprise one or more additional components.

According to a second exemplary aspect of the invention, the method further comprises:
- gathering a fingerprint information indicative of one or more radio nodes that are observable at a location at which the fingerprint information is gathered, and/or at least one or more RTT measurements indicative of a respective round-trip-time measurement of a first length of time a signal takes to be sent between a mobile device that gathered the fingerprint information and a respective radio node and a second length of time a signal takes to be sent; and
- outputting the fingerprint information; and
- utilizing the one or more obtained and/or determined signal strength directional derivative fields.

This method may for instance be performed by a mobile device, e.g. a mobile terminal, a smartphone, a tablet, a wearable, an IoT (Internet-of-Things) device, to name but a few non-limiting examples. For instance, the method may be performed by using at least one processor of the mobile device. The method may be performed by a module or component executed by such a mobile device. The mobile device may for instance be the mobile device which sends a signal to the respective radio node and receives a signal back, or which receives a signal from the respective radio node and sends a signal back for gathering a respective RTT measurement.

According to a further exemplary aspect, a computer program is disclosed, the computer program when executed by a processor causing an apparatus, for instance a server, to perform the actions of the method according to the second exemplary aspect

The computer program may be stored on computer-readable storage medium, in particular a tangible and/or non-transitory medium. The computer readable storage medium could for example be a disk or a memory or the like. The computer program could be stored in the computer readable storage medium in the form of instructions encoding the computer-readable storage medium. The computer readable storage medium may be intended for taking part in the operation of a device, like an internal or external memory, for instance a Read-Only Memory (ROM) or hard disk of a computer, or be intended for distribution of the program, like an optical disc.

According to a further exemplary aspect of the invention, an apparatus is disclosed, configured to perform or comprising respective means for performing the method according to the second exemplary aspect.

The means of the apparatus can be implemented in hardware and/or software. They may comprise for instance at least one processor for executing computer program code for performing the required functions, at least one memory storing the program code, or both. Alternatively, they could comprise for instance circuitry that is designed to implement the required functions, for instance implemented in a chipset or a chip, like an integrated circuit. In general, the means may comprise for instance one or more processing means or processors.

According to a further exemplary aspect of the invention, an apparatus is disclosed, comprising at least one processor and at least one memory including computer program code, the at least one memory and the computer program code configured to, with the at least one processor, cause an apparatus, for instance the apparatus, at least to perform the method according to the second exemplary aspect.

The above-disclosed apparatus according to any aspect (e.g. the second exemplary aspect) of the invention may be a module or a component for a device, for example a chip. Alternatively, the disclosed apparatus according to any aspect of the invention may be a device, for instance a mobile device. The disclosed apparatus according to any aspect of the invention may comprise only the disclosed components, for instance means, processor, memory, or may further comprise one or more additional components.

According to a third exemplary aspect of the invention, a system is disclosed, comprising:
a first apparatus according to the first exemplary aspect of the present invention as disclosed above, configured to perform the method of the first exemplary aspect of the present invention, and a second apparatus according to the second exemplary aspect of the present invention as disclosed above, configured to perform the method of the second exemplary aspect of the present invention.

The first apparatus and the second apparatus may in particular be configured to perform the respective methods according to the first and the second exemplary aspect of the present invention together.

The method according to the first exemplary aspect of the present invention (performed by the at least one server) and the method according to the second exemplary aspect of the present invention (performed by at least one apparatus, e.g. a mobile device) may for instance be performed together in real-time.

In the following, exemplary features and exemplary embodiments of all aspects of the present invention will be described in further detail.

The respective method(s) according to the first or (and) second exemplary aspect(s) of the present invention is (are) used to check whether or not one or more RTT measurements, on which a positioning should be based, are valid, in particular that a respective RTT measurement was not subject to one or more signal reflections or multipath propagation e.g. resulting from a Non-Line-of-Sight measurement between a mobile device measuring the respective RTT measurement and a base station of a cellular communication network or access point of a non-cellular communication network. Then, one or more RTT measurements that are not considered to be valid, e.g. since they are measured based on a Non-Line-of-Sight measurement resulting in multipath and/or reflections of the signals that are measured, are discarded or their respective weight in the positioning that is to be performed is reduced to enable enhancing the positioning accuracy, e.g. of a location estimate that is to be determined.

A respective fingerprint information may for instance be gathered (e.g. measured), e.g. by a mobile device performing the method according to the second exemplary aspect of the present invention, at least partially based one or more (e.g. radio) signals sent by one or more radio nodes. For instance, a location estimate may for instance be determinable at least partially based on such a fingerprint information. To determine a respective location estimate, e.g. a radio map may for instance be utilized to determine the position at which the respective fingerprint information was gathered (e.g. measured) by comparing the fingerprint information to corresponding information comprised by or represented by the radio map, e.g. at which position of a respective radio map are the one or more signals that are comprised or represented by the fingerprint information. In this way, a respective location estimate representing the determined position may for instance be determined.

The one or more radio nodes may for instance be comprised by or be a part of the radio positioning support system. One or more (e.g. all) radio nodes may for instance transmit (e.g. broadcast) or trigger to transmit or may be configured to transmit or to trigger to transmit (a) respective (radio) signal(s), e.g. automatically and/or repeatedly (e.g. on a periodic basis). Such signal(s) may for instance comprise or contain information enabling receivers (e.g. at least one mobile device located within a coverage area of the one or more radio nodes) to gather (e.g. receive and/or measure) the signal(s). The signal(s) may for instance enable the at least one mobile device to determine (e.g. estimate) its position at least partially based on the signal(s). An example of information comprised or contained by such one or more respective signals is at least one identifier of one specific radio node of the one or more radio nodes. Such a respective identifier of a respective radio node may for instance enable the at least one mobile device (as the receiver) to obtain the respective location of the respective radio node, e.g. by utilizing the respective identifier to look-up (e.g. in a database) the location of the respective radio node, to name but one non-limiting example.

An example of such an identifier of a respective radio node may for instance be a name of the respective radio node, an address of the respective radio node (e.g. a MAC address or an IP address), an universally unique identifier (UUID), a Service Set Identifier (SSID), a Basic Service Set Identifier (BSSID), to name but a few non-limiting examples. Such an identifier of the respective radio node may for instance be unique to the respective radio node, thus allowing the respective radio node to be identified out of (e.g. all of) the one or more radio nodes.

A respective radio node of the one or more radio nodes may for instance comprise a radio interface, e.g. a Bluetooth and/or BLE and/or Wireless Local Area Network (WLAN) radio interface, which includes at least a Bluetooth and/or BLE and/or WLAN transmitter. Such a transmitter may for instance also be a part of a corresponding transceiver. The radio interface may for instance be configured to transmit (radio) signal(s). An example of a respective radio node is a WLAN access point, and/or Bluetooth beacon and/or BLE beacon.

Additionally, a respective fingerprint information may for instance comprise or contain at least one signal strength value indicative of e.g. a RSSI (Received Signal Strength Indication) with which the signal(s) of the one or more radio nodes are observable (e.g. receivable) at the location at which e.g. at least one mobile device performing the method according to the second exemplary aspect of the present invention has gathered the respective fingerprint information.

Additionally or alternatively, a respective fingerprint information may for instance be indicative of a (e.g. measured) power of (a) received signal(s) with which the signal(s) are transmitted by the one or more radio nodes. Such a power of the signal(s) is referred to as signal strength information within the meaning of the present invention. An example of a received signal strength value that may for instance be comprised by or represented by a signal strength information is a respective RSSI or a representation of a physical receiving power level value (e.g. a Rx power level value), e.g. in dBm.

Additionally, a respective fingerprint information may for instance comprise or contain at least one RTT measurement indicative of the time a signal takes to be sent from a respective mobile device to the respective radio node (e.g. an access point according to WLAN- and/or BLE-communication standard) and back from the respective radio node to the respective mobile device. In case one or more (radio) signals) of more than one radio node is observable, it will be understood that the respective fingerprint information may for instance comprise or represent a respective RTT measurement to every radio node of the one or more radio nodes which respective (radio) signals are observable at the location at which the respective fingerprint information is gathered (e.g. measured).

In the installation stage of a respective radio positioning support system, dedicated positioning support radio nodes (e.g. Bluetooth beacons) may for instance be installed in the environment for which a positioning system is to be provided. Alternatively or additionally, a non-Global Navigation Satellite System (GNSS) based radio positioning system may make use of existing radio nodes like WLAN- and/or BLE access points or cellular network nodes (e.g. base stations) as positioning support radio nodes.

In the subsequent training stage, positioning data are collected. The data may be collected in the form of fingerprint information (also called radio fingerprint observation reports) that are based on gatherings (e.g. measurements) by one or more respective mobile devices, as described above. A radio fingerprint observation report may indicate an observation position and radio signal parameters obtained as a result of measurements taken from the radio interface when scanning for observable radio signals at the observation position. The observation position may be for example GNSS based, sensor-based, or manually inputted. Measurements taken from the radio interface may comprise, by way of example, measured received signal strengths and identifiers of radio nodes (e.g. Bluetooth beacons, WLAN access points, base stations of a cellular network) transmitting the radio signals observable at the observation position. The training may be a continuous background process, in which mobile devices of a large number of consumers are continuously reporting collected fingerprint information to a respective server. Consumers may consent to a participation in such a radio fingerprint information collection, if their device is equipped with the needed functionality. This approach is also referred to as crowd-sourcing. Since crowd-sourcing is a background process that does not directly benefit the device user, it is desirable that the crowd-sourcing process only consumes limited resources of the device.

Alternatively or additionally, mobile devices may be used for gathering (e.g. collecting) radio fingerprint information in a systematic manner. Collected reports may be uploaded to a database in a positioning server or in a positioning cloud, where algorithms may be run to generate radio models of positioning support devices (e.g. radio nodes such as Bluetooth beacons, WLAN access points, and/or base stations of a cellular network) and/or radio maps for positioning purposes.

In the positioning stage, a respective mobile device may estimate its current position based on own measurements taken from the radio interface and/or on information in the form of a (e.g. "new") fingerprint information or a subset of information that is available from the training stage. Radio model information or radio map information that has been generated in the training stage may be provided to mobile devices by a positioning server e.g. via the Internet as assistance information for use in position estimation. Alternatively, radio model information and/or radio map information may be stored in a positioning server to which the mobile devices may connect to via the Internet for obtaining a position estimate.

Further, e.g. a positioning server may for instance be utilized as follows: Such a positioning server may for instance comprise or be connectable to a database storing a global radio map, and/or one or more partial radio maps. Such a radio map may for instance be generated based on one or more radio signal parameter(s), e.g. one or more pieces of fingerprint information (e.g. radio fingerprint observation report) so that such a radio map may for instance be utilized to determine a position estimate for the device that has gathered (e.g. measured) a respective radio measurement. Since e.g. the corresponding fingerprint indicative of the current position of the mobile device may for instance be comprised or represented by such a radio map, a determined position estimate may for instance be determined to represent this position.

A respective RTT measurement may for instance be gathered by a mobile device, e.g. a mobile device performing the method according to the second exemplary aspect of the present invention. Such a respective RTT measurement may for instance be gathered (e.g. measured) in indoor positioning scenarios. Such a respective RTT measurement may for instance be performed by a mobile device, only. Thus, a respective RTT measurement may for instance be initiated by a respective mobile device. After such a respective RTT measurement is gathered (e.g. measured) by a mobile device, the respective RTT measurement may for instance be output by the respective mobile device, e.g. to an apparatus (e.g. a server or a server cloud) performing the method according to the first exemplary aspect of the present invention. Alternatively or additionally, the respective RTT measurement is utilized by the mobile device itself, e.g. for determining a location estimate and/or a refined location estimate, as is disclosed in more detail in this part of the specification.

Such a RTT measurement may for instance be the length of time it takes from sending a message from a respective mobile device to a respective radio node of the one or more radio nodes, plus a processing delay (referred to as processing delay d) of the respective radio node receiving the message, plus the length of time it takes a response from the respective radio node to be sent back to the respective mobile device. Such an RTT measurement may for instance enable to determine a distance between the respective mobile device and the respective radio node.

Further, such a RTT measurement may for instance comprise or represent a first timestamp (e.g. referred to as t(1)) indicative of the time at which a respective message (as described above) was sent, e.g. from a respective mobile device to a respective radio node. Further, such a RTT measurement may for instance comprise or represent a second timestamp (referred to as t(2)) indicative of the time at which the respective message was received by the respective radio node. Further, such a RTT measurement may for instance comprise or represent a third timestamp (e.g. referred to as t(3)) indicative of the time at which the response was sent by the respective radio node. Further, such a RTT measurement may for instance comprise or represent a fourth timestamp (e.g. referred to as t(4)) indicative of the time at which the response sent by the respective radio node was received by the respective mobile device.

At least partially based on such timestamps, e.g. a respective processing delay d may for instance be determined based on the following formula: d = t(3) - t(2). Further, a distance l between the respective mobile device and the respective radio node may for instance be determined based on the following formula: l = c ^{∗} [t(4) - (t(1) - d) / 2, where c is the speed of light.

The determining of one or more signal strength directional derivative fields is at least partially based on one or more pieces of fingerprint information. Within the meaning of the present invention, this may for instance comprise obtaining (e.g. receiving) a respective signal strength field of a respective radio node that is comprised or represented by at least one respective fingerprint information of the one or more pieces of fingerprint information. For instance, the at least one server may for instance retrieve such a signal strength field associated with the respective radio node comprised or represented by the respective fingerprint information out of a memory, e.g. a memory comprising a database, wherein the memory may for instance be comprised or be connectable to the at least one server. Additionally or alternatively, such a database may for instance be comprised or connectable to a positioning server. Additionally or alternatively, such a database may for instance be comprised by or be represented by a radio map that may for instance be determined (e.g. generated) in a training stage of a respective radio positioning support system, as disclosed above. For instance, such a radio map may for instance comprise a respective signal strength field for one or more radio nodes that are part of the respective radio map.

The one or more signal strength directional derivative fields may for instance be determined by determining (e.g. calculating) one or more respective values based on the gradient (mathematical operator) of a scalar function that represents a (e.g. previously obtained) respective values comprised or represented by the respective signal strength field of the respective radio node. Additionally or alternatively, a respective signal strength directional derivative field may for instance be determined by estimating a respective signal strength gradient field of the respective radio node. Additionally or alternatively, a respective signal strength directional derivative field may for instance be determined by calculating an estimate of the directional derivative indicative of a multivariable function and how it changes along a defined vector (e.g. unit vector). The directional derivative may for instance be determined at each point of a signal strength field of the respective radio node along a unit vector pointing from a transmitter of the respective radio node to the respective point of each point of the signal strength field of the respective radio node. Additionally or alternatively, a respective signal strength directional derivative field may for instance be determined by calculating the directional derivative directly in polar coordinates (e.g. with its origin at the location of the respective radio node, respectively its transmitter), where the partial derivate with respect to the radial component may for instance represent the sought directional derivative.

Then, the determined one or more signal strength directional derivative fields may for instance be stored in a memory, e.g. comprising a database. Such a memory may for instance be comprised by or be connectable to the at least one server performing the method according to the first exemplary aspect of the present invention. Optionally, such a database may for instance be maintained. The maintaining of such a database may for instance be referred to as keeping the database. The database, or the one or more signal strength directional derivative fields stored in the database, may for instance be held available so that e.g. independent upon a communication connection such one or more signal strength directional derivative fields stored in the database can be retrieved to be further utilized, e.g. for determining a location estimate (e.g. by the at least one server). Additionally or alternatively, the one or more signal strength directional derivative fields may for instance be output upon a certain request, e.g. a request received from a respective mobile device. The request may for instance comprise at least one identifier of a radio node, so that a corresponding signal strength directional derivative field (e.g. that is associated with the respective identifier of the respective radio node) may for instance be provided (e.g. output or send) to a sender of the request, thus, the respective mobile device. Then, the respective mobile device may for instance utilize the respective signal strength directional derivative field in a positioning.

Thus, one or more signal strength directional derivative fields may for instance be provided to a respective mobile device, or to a plurality (e.g. at least two) of respective mobile devices. In this way, e.g. the processing effort may for instance be reducible by avoiding the determining of a respective signal strength directional derivative field for a respective radio node multiple times, to name but one non-limiting example. Also, one or more signal strength directional derivative fields may for instance be provided (e.g. output or send) to one or more location-based services so that such (a) location-based service(s) may for instance utilize the one or more respective signal strength directional derivative fields in a positioning. For instance, such (a) location-based service may for instance themselves provide at least one signal strength directional derivative field to one or more respective device(s), e.g. based on a respective request, as disclosed above.

Alternatively or additionally, the one or more signal strength directional derivative fields may for instance be provided by comprising the one or more signal strength directional derivative fields in a radio map, e.g. a radio map that covers the coverage area of one or more radio nodes based on which sent (radio) signals the respective signal strength directional derivative field of the one or more signal strength directional derivative fields was determined. By providing (e.g. outputting or sending) a respective radio map, or a part of it (e.g. a partial radio map) comprising at least one signal strength directional derivative field, the respective signal strength directional derivative field may for instance also be provided within the meaning of the present invention.

In this way, e.g. prior to performing a positioning, one or more signal strength directional derivative fields are determined based on one or more signal strength fields, which may for instance be measured by one or more respective mobile devices. Then, the determined signal strength directional derivative fields are provided or kept available (e.g. by storing the signal strength directional derivative fields) to be utilized in a positioning.

According to an exemplary embodiment of all exemplary aspects of the present invention, the respective method further comprises:
- obtaining a fingerprint information indicative of at least one or more radio signals sent by one or more radio nodes that are observable at a location at which the obtained fingerprint information was gathered, and/or indicative of at least one or more RTT measurements, wherein each RTT measurement of the one or more RTT measurements is indicative of a respective round-trip-time measurement of a first length of time a signal takes to be sent between a mobile device that gathered the obtained fingerprint information and a respective radio node and a second length of time a signal takes to be sent back; and- determining a RTT discard information at least partially based on the obtained fingerprint information and the one or more signal strength directional derivative fields, wherein the RTT discard information is indicative of an uncertainty of the one or more RTT measurements, wherein each respective RTT measurement of the one or more RTT measurements is associated with the uncertainty, and further being indicative of whether or not the respective RTT measurement was measured based on a line-of-sight RTT measurement; and
- utilizing the RTT discard information in a positioning.

The RTT measurement may for instance be measured between the mobile device and the respective radio node. Thus, the respective RTT measurement may for instance be initiated by the mobile device or the respective radio node. Within the meaning of the present invention, such a RTT measurement may for instance be measured based on (a) signal being transmitted (e.g. send) from the mobile device to the respective radio node and back to the mobile device, or alternatively, from the respective radio node to the mobile device and back to the respective radio node. Both cases are understood to be comprised by the term "between the mobile device and the respective radio node".

Each RTT measurement of the one or more RTT measurements may for instance be indicative of a respective round-trip-time measurement of a first length of time and a second length of time, wherein the first length of time is represented by a time a signal takes to be sent from a mobile device that gathered the obtained fingerprint information to a respective radio node and a second length of time a signal takes to be sent back from the respective radio node to the mobile device. For instance, such a RTT measurement may for instance be indicative of a RTT from a mobile device to radio node (e.g. access point) and back to mobile device.

Alternatively, each RTT measurement of the one or more RTT measurements may for instance be indicative of a respective round-trip-time measurement of a first length of time and a second length of time, wherein the first length of time is represented by a time a signal takes to be sent from a respective radio node to a mobile device and a second length of time a signal takes to be sent back from the mobile device to the respective radio node. For instance, such a RTT measurement may for instance be indicative of a RTT from a radio node (e.g. access point) to a mobile device and back to the radio node.

The fingerprint information may for instance be gathered prior to the obtaining of the respective fingerprint information that is performed by the method according to the first exemplary aspect of the present invention. Further, the fingerprint information may for instance be gathered by at least one mobile device performing the method according to the second exemplary aspect of the present invention.

The fingerprint information may for instance be obtained by receiving said fingerprint information. The fingerprint information may for instance be obtained by retrieving the fingerprint information, e.g. from a memory comprised by or connectable to the at least one server performing the method according to the first exemplary aspect of the present invention. The fingerprint information may for instance be received from a certain mobile device performing the method according to the second exemplary aspect of the present invention. The mobile device may for instance provide (e.g. send) the fingerprint information to the at least one server. Alternatively, the mobile device may for instance send the fingerprint information to an entity that is different from the at least one server, wherein this entity may for instance then relay the fingerprint information to the at least one server. Thus, a respective mobile device may for instance gather a fingerprint information, e.g. by measuring one or more RTT measurement and determining one or more signal strength values based on one or more (radio) signals sent by the one or more radio nodes, wherein the one or more signals are observable at the position at which the respective mobile device performs the gathering of the fingerprint information.

Then, the respective mobile device performing the method according to the second exemplary aspect of the present invention may for instance output (e.g. sent) the fingerprint information to the at least one server performing the method according to the first exemplary aspect of the present invention. The at least one server performing the method according to the first exemplary aspect of the present invention may for instance obtain (e.g. receive) the output fingerprint information.

The obtained fingerprint information may for instance be stored, e.g. for later use in a/the positioning. It will be understood that in case the obtained fingerprint information comprises or represents more than one signal strength value and/or RTT measurement that was gathered (e.g. measured) based on one or more (radio) signals of more than one radio node (e.g. a plurality of radio nodes), a respective signal strength field may for instance be obtained for each radio node of the plurality of radio nodes.

A Line-of-Sight (LoS) measurement, as used herein, refers to a scenario of a RTT measurement in which a direct propagation of one or more signals occur e.g. between a respective radio node (e.g. access point) and a respective mobile device involved in the respective RTT measurement. In case a RTT measurement is based on such a LoS measurement, the RTT measurement can be assumed to be correct and be of low uncertainty.

A Non-Line-of-Sight (NLoS) measurement, as used herein, refers to a scenario of a RTT measurement in which a reflected propagation of one or more signals occur e.g. between a respective radio node (e.g. access point) and a respective mobile device. In case a RTT measurement is based on such a NLoS measurement, the respective RTT measurement can be assumed to be too high and be of low uncertainty.

A LoS- in combination with a NLoS-measurement, as used herein, refers to a scenario of a RTT measurement in which mixed components are comprised by the respective RTT measurement. Thus, direct and reflected propagation of one or more signals occur e.g. between a respective radio node (e.g. access point) and a respective mobile device. In case a RTT measurement is based on such a combination of a LoS- and a NLoS-measurement, the respective RTT measurement can be assumed to be of high uncertainty.

For instance, in case a RTT measurement is analyzed and it is determined to be one of the cases of i) a LoS-measurement, or ii) a combination of LoS- and a NLoS-measurement, the RTT discard information may for instance be determined to represent that i) in case of LoS-measurement the RTT measurement is correct, and ii) in case of a LoS- in combination with NLoS-measurement the RTT measurement comprises typically high measurement noise. In the latter case, then, e.g. the weight in a positioning of such RTT measurement may for instance be determined to be low. This information may for instance be represented or comprised by the determined RTT discard information.

In case a RTT measurement is analyzed and it is determined to be based on the scenario of a NLoS-measurement, the RTT discard information may for instance comprise or represent an information to discard or assign a (e.g. very) low weight to the respective RTT measurement, so that in a positioning in which the respective RTT measurement may for instance be utilized (e.g. distance calculation performed based on the respective RTT measurement), the influence of this respective RTT measurement may be (e.g. very) low. Since the respective RTT measurement that is based on a NLoS-measurement - though reflected - may for instance comprise (e.g. very) low noise, it may for instance be difficult to identify a respective RTT measurement that is based on a NLoS-measurement. This is because the reflected signal typically still has a high signal strength (e.g. higher than a pre-defined threshold) and does not get distorted by the mixing of the LoS and the NLoS components. The solution according to all aspects of the present invention enables in particular to detect this case, e.g. without the need of further external information.

According to an exemplary embodiment the respective method further comprises:
- determining a location estimate;
- analyzing the respective signal strength directional derivative field for each RTT measurement of the one or more RTT measurements of fingerprint information,

wherein it is analyzed whether or not at least one high value of directed gradient exists that is located between the location estimate and the respective radio node, and
in case such at least one high value does not exist:
   - determining the RTT discard information to be indicative of the respective RTT measurement to be valid;
in case such at least one high value does exist:
   - checking whether or not equal or more than a pre-defined number of valid RTT measurements are available for the respective radio nodes; and
   - determining the RTT discard information to be indicative of the respective RTT measurement being discarded in case the pre-defined number of valid RTT measurements is available, or else, to be indicative of the respective RTT measurement to be associated with a pre-defined uncertainty that is higher than a respective uncertainty that is associated with a valid RTT measurement; and
- determining a refined location estimate at least partially based on the RTT discard information.

The method according to the first and/or second exemplary aspect of the present invention proposes to improve location estimates, e.g. which are determined based on the coverage area-based approach as aforementioned, by utilizing one or more RTT measurements that may for instance be comprised or represented by a respective fingerprint information. For instance, in a first step, a location estimate as a result of a coverage-based positioning method may for instance be determined, e.g. being indicative of a possible area in which the fingerprint information that is utilized to determine the location estimate is positioned.

For example, a radio map may be provided (e.g. transmitted) by a positioning server to the respective mobile device(s) and/or which may be hold available by the respective mobile device(s) (e.g. stored in memory means of the mobile device(s)). For example, the radio map contains or represents a respective radio model for a plurality of radio nodes transmitting (e.g. broadcasting) radio signals that are observable within an area covered by the radio map. If the radio map covers a venue (e.g. building), the radio map may contain or represent, e.g. for each floor of the venue, a respective radio model for a plurality of radio nodes transmitting (e.g. broadcasting) radio signals that are observable on the respective floor of the venue.

Then, one or more respective signal strength directional derivative fields of the respective radio node(s) are obtained by the respective mobile device.

Each signal strength directional derivative field of the one or more signal strength directional derivative fields may for instance be analyzed, e.g. by determining whether or not the respective signal strength directional derivative field comprises or represents a relatively high (or large) gradient between the determined location estimate and the position of the respective radio node which is associated with the respective signal strength directional derivative field. The gradient between the determined location estimate and the position of the respective radio node may for instance be considered to be relatively high in case the represented normal vector is of an amount differing more than a pre-defined threshold value from the average (e.g. mean average value, or arithmetic average value) of the (e.g. entire) signal strength directional derivative field. For instance, in case a structure (e.g. a wall) is located between the determined location estimate and the position of the respective radio node, at least one gradient comprised by the signal strength directional derivative field may for instance be of a value differing more than the pre-defined threshold value, e.g. from the average as represented by the threshold value, to name but one non-limiting example. For instance, such a gradient may for instance be a value of about -40dBm/m or more, wherein the average of the other gradients comprised or represented by the respective signal strength directional derivative field may for instance be of a value of approximately 0 to -5 dB/m, to name but one non-limiting value range. This range or a value comprised by the range may be considered as a pre-defined threshold value.

If such at least one gradient exists in the analyzed signal strength directional derivative field of the one or more signal strength directional derivative fields, the further respective signal strength directional derivative fields of the one or more signal strength directional derivative field may for instance be analyzed in the same way. Then, all of the results may for instance be compared (e.g. counted) to each other.

For instance, in case there are enough further RTT measurements comprised or represented by the fingerprint information, which were measured based on a LoS-measurement, and/or a combination of a Los- and a NLoS-measurement, the RTT discard information may for instance be determined to be indicative of the respective RTT measurement being discarded, or to be indicative of the respective RTT measurement to be associated with a pre-defined uncertainty that is higher than a respective uncertainty that is associated with a valid RTT measurement. Thus, in case enough "valid" (thus, e.g. RTT measurement(s) that was (were) measured based on a LoS-measurement) RTT measurements are available, "bad" (thus, e.g. RTT measurement(s) that was (were) measured based on NLoS-measurement) ones may for instance be fully discarded.

If such at least one large gradient does not exist in the analyzed signal strength directional derivative field of the one or more signal strength directional derivative fields, the RTT discard information may for instance be determined to be indicative of the respective RTT measurement to be valid.

Then, the refined location estimate may for instance be determined, wherein the refined location estimate is determined at least partially based on the respective one or more pieces of RTT discard information that were previously determined for each signal strength directional derivative field of the one or more signal strength directional derivative fields. In particular, the respective RTT measurements and their respective RTT discard information may for instance be utilized to correct the location estimate, e.g. a coarse location estimate, e.g. that was determined based on another positioning technique, such as Wi-Fi signal strength or GNSS (Global Navigation Satellite System; e.g. GPS (Global Positioning System), Galileo) based positioning, to name but one non-limiting example, so that the refined location estimate may for instance be more accurate due to taking into account whether or not a respective RTT measurement was measured based on a NLoS-measurement. The respective RTT measurement may for instance be utilized by determining a distance to the respective radio node. In case more than one RTT measurement can be utilized in this way, e.g. by determining a crossing of the respective distances within the respective coverage area of the respective radio nodes, a very accurate location estimate can be determined.

Further, in case a respective RTT measurement was measured based on a NLoS-measurement, it may for instance be discarded in the determining of the refined location estimate, or it may for instance be taken into account only to a less significant degree than other one or more RTT measurements measured based on a LoS-measurement, and/or a combination of a LoS- and a NLoS-measurement - by reducing the weight of the respective RTT measurement that was measured based on a NLoS-measurement - in the determining of the refined location estimate. In this way, the determining of the crossings of one or more distances that are determined based on one or more RTT measurements is not negatively affected by inaccurate distances provoked by such RTT measurements with high uncertainty due to a respective NLoS-measurement.

A determined RTT discard information may for instance be further indicative of a respective RTT measurement that was comprised or represented by the fingerprint information. In this way, an association between a respective RTT measurement as comprised or represented by the fingerprint information and the determined RTT discard information can be ensured. For instance, such an association may for instance be achieved by comprising a respective identifier of a respective radio node in the respective RTT measurement and/or in the respective RTT discard information, wherein the respective identifier is indicative of the respective radio node, wherein the respective RTT measurement was measured between this respective radio node and a respective mobile device.

In such a positioning, e.g. a location estimate may for instance be determined. Then, the one or more signal strength directional derivative fields (e.g. provided or kept available) may for instance be used to refine the location estimate respectively determining a refined location estimate. It will be understood that the determining of the refined location estimate is based, at least partially, on at least one respective RTT measurement, which may for instance be comprised by or represented by a part of the fingerprint information.

According to an exemplary embodiment of all exemplary aspects of the present invention, the RTT discard information is determined without considering further pieces of information.

Thus, the RTT discard information may for instance be determined based on a respective fingerprint information, one or more respective RTT measurements comprised by the respective fingerprint information, and/or one or more respective signals strength fields or one or more respective signal strength directional derivative fields. Further respectively other pieces of information may for instance not be considered at all. In this way, it is enabled to determine whether or not an RTT measurement was measured based on a NLoS connection, only with information that can be determined respectively derived based on known information respectively measurements. Thus, the method according to all exemplary aspects can be implemented using the given infrastructure. In case the RTT discard information is determined at least partially based on the one or more respective signals strength fields, the one or more respective signals strength fields may for instance used to determine one or more respective signal strength directional derivative fields.

According to an exemplary embodiment of the first exemplary aspect of the present invention, wherein the determining of the signal strength directional derivative fields further comprises:
- determining one or more directional derivatives at least partially based on a signal strength field indicative of one or more received signal strength values at a respective location within a coverage area of a respective radio node, wherein the one or more directional derivatives are determined by a directional derivative with respect to a direction pointing away from the respective radio node of the one or more radio nodes.

In case the one or more directional derivatives are determined in a Cartesian coordinate system (e.g. estimating of gradient(s) in Cartesian coordinates), the one or more directional derivatives may for instance be determined by determining (e.g. estimating) a gradient field and one or more normal unit vectors that are pointed away from the respective radio node. Then, the respective directional derivative with respect to such a direction may for instance be determined. In case the one or more directional derivatives are determined in a Polar coordinate system (e.g. estimating of gradient(s) in Polar coordinates), the one or more directional derivatives may for instance be the radial partial derivative, directly.

According to an exemplary embodiment of the first exemplary aspect of the present invention, the determining of the signal strength directional derivative directional derivative fields further comprises:
- determining a scalar field based on the one or more received signal strength values; and
- determining one or more directed gradients based on the scalar field.

The one or more directed gradients may for instance be determined based on the scalar field in a pre-defined direction. The direction may for instance be pointing away from the radio node. The direction may for instance be along a unit vector pointing from the radio node location to a certain point of a respective signal strength field.

If there exists a high signal strength gradient between the device and radio node locations, it may for instance be assumed that a signal is reflected, thus, a respective RTT measurement may for instance be based on a NLoS-measurement respectively NLoS-scenario. The determining of the scalar field, and/or of the one or more directed gradients, and/or of the one or more dot products at one or more points (e.g. each point) of a respective signal strength field of a respective radio node, wherein the one or more dot products are calculated between a respective signal strength gradient at a certain point of the one or more points and a unit vector pointing from the radio node location to the respective point may for instance be considered when determining the one or more signal strength directional derivative fields. For example, one or more of the aforementioned may for instance be part of the respective multivariable function that describes how a respective signal strength field of a respective radio node changes along a certain direction (e.g. along a unit vector). In this way, it is enabled to determine whether or not a NLoS connection is present between a respective mobile device and a respective radio node.

According to an exemplary embodiment of all exemplary aspects of the present invention, the method further comprises:
- determining a LoS-radius information indicative of a radius in which the respective radio node is located in its center and in which one or more RTT measurements are accurate, wherein the RTT discard information is determined further based on the LoS-radius information.

For each radio node of the one or more radio nodes, a respective LoS-radius information may for instance be determined. The respective LoS-radius information may for instance be determined by computing the "radius of LoS" around the radio node, wherein within this radius (e.g. an (geographic) area), one or more RTT measurements that are gathered (e.g. measured) are assumed to be accurate. The RTT measurements may for instance be assumed to be accurate in case the respective RTT measurement is a LoS-measurement.

The respective LoS-radius information may for instance be determined from a respective signal strength field of the respective radio node, e.g. by determining a respective signal strength directional derivative field based on the respective signal strength field of the respective radio node, e.g. wherein the radius is of the length between the respective radio node and a respective structure causing at least one high gradient comprised by the respective signal strength directional derivative field. For instance, a radio node (e.g. an WLAN and/or BLE access point) located in a small room inside a venue (e.g. office building) may for instance have a small "radius of LoS" that is comprised or represented by the LoS-radius information compared to another radio node (e.g. another WLAN and/or BLE access point) that is located e.g. in a large hall of the venue.

According to an exemplary embodiment of the first exemplary aspect of the present invention, the determining of the signal strength directional derivative fields further comprises:
if the respective directional derivative of the one or more signal strength directional derivative fields is above a certain threshold:
- setting the uncertainty of the respective RTT discard information to be higher compared to a RTT measurement which is equal to or not above the certain threshold. For instance, if according to the determined signal strength directional derivative field of a respective radio node a large change of signal strength, e.g. represented by a large derivative e.g. larger than a pre-defined threshold, occurs between a respective mobile device and the respective radio node, then uncertainty may for instance be set high. For instance, uncertainty may for instance be set to 'high" or "low". Thus, uncertainty may for instance represent a binary value in its easiest implementation. If uncertainty associated with a respective RTT measurement is 'high', then the respective RTT measurement may for instance be discarded in a determining of a location estimate of a respective mobile device since it may lead to a falsified result. It will be understood that the uncertainty may for instance be represented by non-binary values as well.

The higher the uncertainty of a respective RTT measurement (e.g. uncertainty set to 'high') is, the more likely the respective RTT measurement is assumed to be inaccurate. In order to achieve the most accurate location estimate to be determined as possible, it may for instance also be considered to not discard a respective RTT measurement in its entirety, but lowering a respective weight of the respective RTT measurement e.g. in the determining of a location estimate. Thus, the influence of this respective RTT measurement used to determine or refine a location estimate based on this respective RTT measurement is lowered.

According to an exemplary embodiment of all exemplary aspects of the present invention, the method further comprises:
- outputting the refined location estimate.

The refined location estimate may for instance be output, e.g. by providing the refined location estimate, or by sending the refined location estimate, e.g. to a respective mobile device or entity that has request a respective location estimate to be determined, to name but a few non-limiting examples.

According to the method of the second exemplary aspect of the present invention, after a fingerprint is gathered by the at least one mobile device configured to perform the method according to the second exemplary aspect of the present invention, the gathered fingerprint information may for instance either be output, e.g. to the at least one server configured to perform the method according to the first exemplary aspect of the present invention, or the gathered fingerprint information may for instance be utilized (e.g. in a positioning, e.g. as defined below) that is performed by the at least one mobile device configured to perform the method according to the second exemplary aspect of the present invention. Thus, after gathering the fingerprint information, the at least one mobile device may for instance obtain (e.g. receive or retrieve from a database) one or more signal strength directional derivative fields. Additionally or alternatively, one or more pieces of fingerprint information may for instance be obtained to determine the one or more signal strength directional derivative fields. Such one or more signal strength directional derivative fields may for instance be determined in addition or in the alternative to obtaining one or more (e.g. further) signal strength directional derivative fields. Of course, in case no pieces of fingerprint information are obtained, a respective signal strength directional derivative field may for instance be determined based at least partially on the gathered fingerprint information. Further, it will be understood that the one or more signal strength directional derivative fields may for instance be determined based at least partially on the one or more pieces of fingerprint information that were obtained (e.g. received, e.g. from an apparatus performing the method according to the first exemplary aspect of the present invention) and the gathered fingerprint information. Then, as described above, the at least one mobile device may for instance utilize the one or more signal strength directional derivative fields in a positioning, e.g. as follows: determining a location estimate, analyzing the respective signal strength directional derivative field for each RTT measurement of the one or more RTT measurements, and determining a refined location estimate. Alternatively to the steps of gathering and/or outputting the fingerprint information, the method according to the second exemplary aspect of the present invention may for instance not comprise the steps of gathering and/or outputting the fingerprint information. Instead, the method according to the second exemplary aspect of the present invention may for instance comprise the steps of obtaining one or more signal strength directional derivative fields; and/or determining one or more signal strength directional derivative fields; and utilizing the one or more obtained and/or determined signal strength directional derivative fields. Thus, the at least one mobile device performing the method according to the second exemplary aspect of the present invention may receive the at least one derivative field (e.g. one or more signal strength directional derivative fields) e.g. from the apparatus performing the method according to the first exemplary aspect of the present invention (e.g. a server or server cloud), but may also determine (e.g. calculate) the at least one derivative field (e.g. one or more signal strength directional derivative field) by itself based at least partially on a respective signal strength field and/or one or more pieces of fingerprint information. Such a signal strength field may for instance be determined (e.g. derived) from respectively based, at least partially, on one or more pieces of fingerprint information (e.g. that are gathered and/or obtained, as disclosed above).

The term "utilizing in a positioning" within the meaning of the present invention may for instance be understood to be not limited to positioning calculation, only. For instance, the term "utilizing in a positioning" may for instance comprise e.g. analyzing of one or more signal strength directional derivative fields, determining whether or not one or more RTT measurements are valid measurements (e.g. not based on a NLoS-measurement), to name but a few non-limiting examples, in addition to strictly determining (e.g. calculating) of position(s).

The at least one mobile device may for instance be portable (e.g. weigh less than 5, 4, 3, 2, or 1 kg). The at least one mobile device may for instance comprise or be connectable to a display for displaying information, e.g. a route that is guided/navigated to a user, to name but one non-limiting example. The at least one mobile device may for instance comprise or be connectable to means for outputting sound, e.g. in the form of spoken commands or information. The at least one mobile device may for instance comprise or be connectable to one or more sensors for determining the devices position, such as for instance a GNSS receiver, in the form of a GPS receiver. The at least one mobile device may for instance comprise or be connectable to one or more sensors, e.g. in the form of an accelerometer and/or a gyroscope for gathering (e.g. measuring) further information. The at least one mobile device may for instance comprise or be connectable to a receiver and/or a transmitter (e.g. a transceiver) for receiving and/or sending information. For instance, the at least one mobile device may comprise one or more radio receivers (e.g. radio transceivers, e.g. cellular radio transceivers) to gather one or more respective pieces of fingerprint information, one or more identifiers of one or more radio nodes, one or more RTT measurements, or a combination thereof, which may for instance enable the method according to the first and/or second exemplary aspects of the present invention to be performed. The at least one mobile device may for instance be suitable for outdoor and/or indoor navigation respectively positioning.

The features and example embodiments of the invention described above may equally pertain to the different aspects according to the present invention.

It is to be understood that the presentation of the invention in this section is merely by way of examples and non-limiting.

Other features of the invention will become apparent from the following detailed description considered in conjunction with the accompanying drawings. It is to be understood, however, that the drawings are designed solely for purposes of illustration and not as a definition of the limits of the invention, for which reference should be made to the appended claims. It should be further understood that the drawings are not drawn to scale and that they are merely intended to conceptually illustrate the structures and procedures described herein.

### BRIEF DESCRIPTION OF THE DRAWINGS

In the figures show:
- Fig. 1: is a block diagram of an exemplary embodiment of a system according to the third exemplary aspect of the present invention;
- Fig. 2: is a flowchart illustrating an exemplary embodiment of a method according to the first exemplary aspect of the present invention;
- Fig. 3: is a flowchart illustrating an exemplary embodiment of a method according to the second exemplary aspect of the present invention;
- Fig. 4: is a flowchart illustrating an exemplary embodiment of a method according to the first and/or second exemplary aspect of the present invention, which may for instance be performed in addition to the flowchart of Fig. 2 and/or of Fig. 3;
- Fig. 5: is a block diagram of an exemplary embodiment of an apparatus according to the first exemplary aspect of the present invention;
- Fig. 6: is a block diagram of an exemplary embodiment of an apparatus according to the second exemplary aspect of the present invention;
- Fig. 7: is a schematic illustration of examples of tangible and non-transitory storage media according to the present invention;
- Fig. 8a-b: are example illustrations of signal strength fields of an exemplary embodiment according to all aspects of the present invention;
- Fig. 9: is an example illustration of a signal strength directional derivative field of an exemplary embodiment according to all aspects of the present invention;
- Fig. 10: is a principle of a RTT measurement of an exemplary embodiment according to all aspects of the present invention; and
- Fig. 11a-c: are schematic illustrations of how a signal may propagate between a radio node and a mobile device.

### DETAILED DESCRIPTION OF SOME EXEMPLARY EMBODIMENTS

The following description serves to deepen the understanding of the present invention and shall be understood to complement and be read together with the description as provided in the above summary section of this specification.

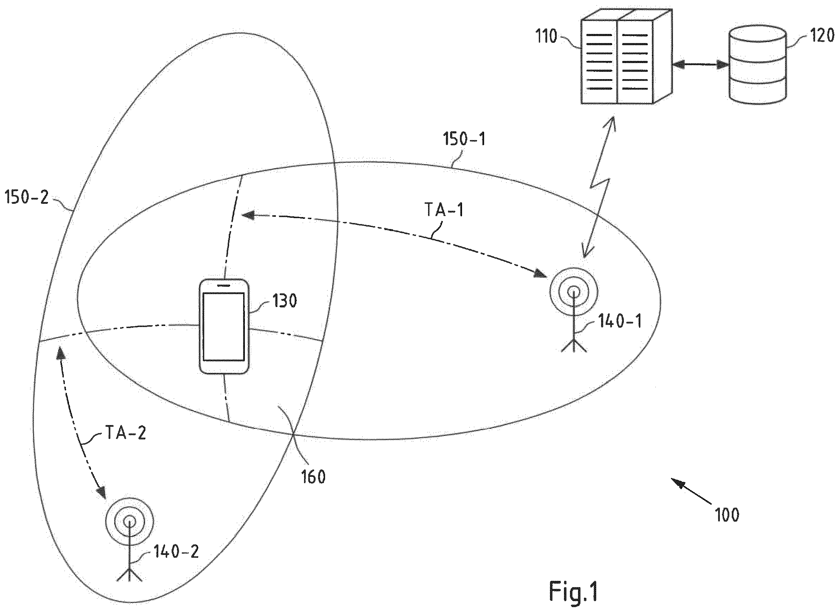

Fig. 1 is a schematic high-level block diagram of a system 100 according to an exemplary aspect of the present invention. Such a system 100 may for instance represent a generic system architecture which may for instance be utilized by example embodiments of the present invention.

System 100 comprises a mobile device 130, a server 110, an optional database 120, and two radio nodes 140, which are embodied as access points 140-1, 140-2 in the illustrated example embodiment.

The mobile device 130 may for instance be embodied as a smartphone, tablet, portable navigation device, loT (Internet-of-Things) device, to name but a few non-limiting examples.

The server 110 may for instance be embodied as a server cloud (e.g. a plurality of servers connected, e.g. via the Internet and providing one or more services at least partially jointly). The server 110 may for instance be connected, e.g. via a communication network (e.g. cellular communication network) employed by the access points 140-1, 140-2, to the mobile device 130, to the optional database 120, and/or to at least one of the access points 140-1, 140-2.

The database 120 may for instance be comprised by or connectable to the server 110. The database 120 may for instance comprise a memory, e.g. for storing one or more pieces of fingerprint information, one or more signal strength directional derivative fields, one or more location estimates, one or more refined location estimates, one or more pieces of LoS-radius information, one or more RTT measurements, one or more pieces of RTT discard information, or a combination thereof, to name but a few non-limiting examples.

The server 110, and/or at least one of the access points 140-1, 140-2 may for instance be configured to perform the first method according to the first exemplary aspect of the present invention. The mobile device 130 may for instance be configured to perform the second method according to the second exemplary aspect of the present invention.

Each of the access points 140-1, 140-2 employs a respective coverage area 150-1, 150-2, in which services may for instance be provided. In order to determine a location estimate indicative of a current location of the mobile device 130, the respective coverage areas 150-1, 150-2 may for instance be utilized. For instance, based on two RTT measurements between the mobile device 130 and the two access points 140-1, 140-2, the location estimate can be determined to be within the area 160, which is the intersection of the two coverage areas 150-1, 150-2.

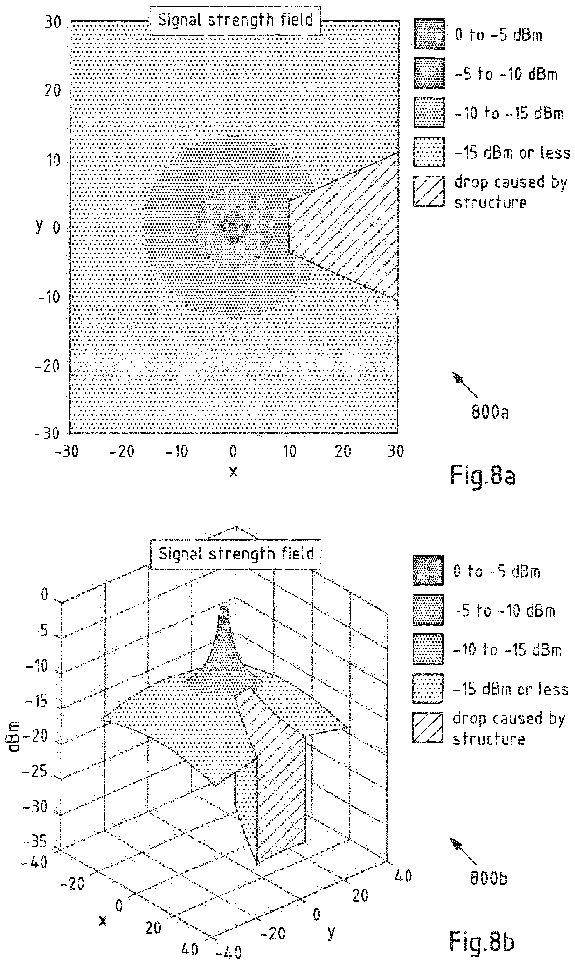

In Fig. 8a and b, it is shown how the presence of a wall or similar structure is projected to the signal strength field. In the shown example embodiment, a 7-m wall has been set parallel to y-axis symmetrically around y=0 at the distance of x=10m from the access point. The wall has been set to cause -15 dB attenuation. The attenuation respectively drop in the attenuation caused by the piece of wall respectively structure can be clearly seen in the respectively shown signal strength field 800a, 800b by the hatched area, which is marked in the legend as "drop caused by structure".

In Fig. 8a and 8b, the respective signal strengths that are observable at a location are illustrated by different areas, wherein each of those areas represents a certain range of signal strength. It will be understood that, in general, the observable signal strength gets higher the closer the location is to the location of the radio node sending one or more radio signals based on which the respective signal strength is measured. The significant drop in signal strength shown in Fig. 8a and 8b is caused by a structure, e.g. a wall, which is illustrated in Fig. 8a and 8b by the hatched area.

The density of the points used in the Fig. 8a, 8b (see respective legend in the respective Fig. 8a, 8b) refers to the attenuation, wherein a high density of points in the area represents a high attenuation, and a lower density of points in the area represents a low attenuation. As the attenuation in the Fig. 8a, 8b is in the unit dB/meter, most significant signal strength drop occurs close to the transmitter, e.g. radio node).

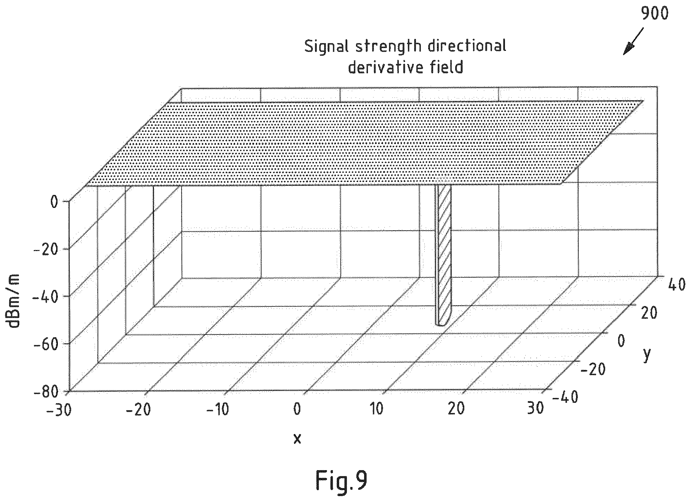

The density of the points used in the Fig. 9 (see respective legend in the respective Fig. Fig. 9) refers to the attenuation, wherein a high density of points in the area represents a small attenuation, and a lower density of points in the area represents a higher attenuation.

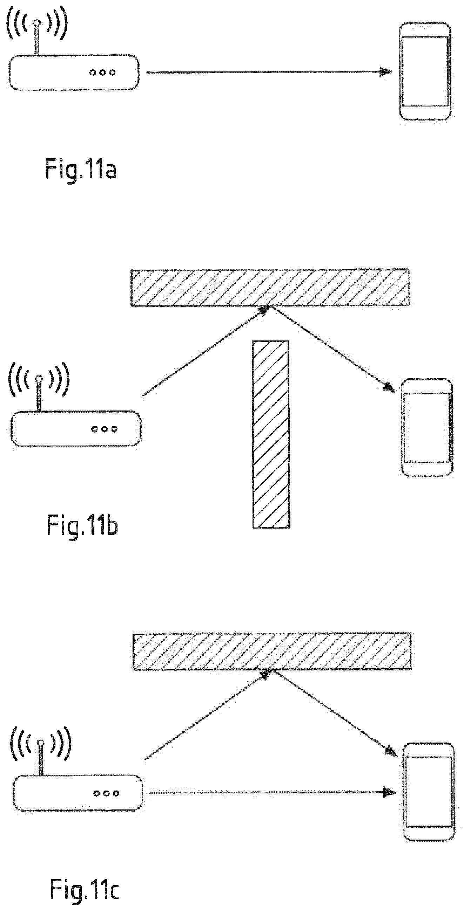

In order to determine whether or not a RTT measurement between a mobile device and a respective radio node may for instance be based on a NLoS-scenario (see Fig. 11b), such a signal strength field, as shown in Fig. 8a and 8b, may for instance be transformed into a signal strength directional derivative field, as is shown in Fig. 9.

Fig. 9 shows an example embodiment according to all exemplary aspects of the present invention, in which at least partially based on a signal strength field (e.g. a signal strength field as is shown in Fig. 8a and 8b) a respective signal strength directional derivative field is determined (e.g. calculated). A respective value of the signal strength directional derivative field may for instance be determined by determining the gradient of a scalar function that represents a respective signal strength field.

The determined signal strength directional derivative field may for instance be analyzed to determine whether or not there are one or more high gradients respectively high value of directed gradients between a location estimate (e.g. determined based on fingerprint information, e.g. comprising or representing one or more (received) signal strength values, and/or one or more RTT measurements) and a respective radio node. If there is a high directional derivative, it may for instance be assumed that a signal is reflected, thus, a respective RTT measurement may for instance be based on a NLoS-measurement respectively NLoS-scenario (see Fig. 11b).

According to example embodiments of the present invention, a fingerprint information may for instance comprise one or more RTT measurement between a mobile device (e.g. mobile device 130) and one or more radio nodes (e.g. radio nodes 140-1 and 140-2) which signals are observable at the location of the mobile device. In Fig. 8a and b, the same signal strength field is shown from two perspectives. Such a signal strength field may for instance originate from a manual data collection e.g. of a plurality of measurements performed by the mobile device, and/or from crowd-sourcing, to name but a few non-limiting examples. Of course, such signal strength fields may for instance be provided from a server (e.g. a positioning server storing such signal strength fields, e.g. server 110 of Fig. 1) to a respective mobile device, e.g. for locations respectively areas in which the respective mobile device is for instance quite regularly located. In Fig. 8a, the shadowing caused by a wall or similar structure is shown. In Fig. 8b, the actual field strength in dBm as well as the -15 dB drop by the wall or similar structure is shown.

In a respective signal strength field such attenuations caused by such a piece of wall or similar structures manifest themselves as high gradients respectively high value of directed gradients. In Fig. 9, a signal strength directional derivative field is shown for the respective signal strength field of Fig. 8a, b. Therefore, determining (e.g. calculating) the signal strength directional derivative field provides a straightforward way to understand, if there are potentially reflecting or absorbing surfaces in the area. The directional derivative field (normal vector directed away from the access point) for the signal strength field of Fig. 8a, b is shown in Fig. 9.

Fig. 11a-c show schematic illustrations of how a signal may propagate between a radio node and a mobile device.

In Fig. 11a, a Line-of-Sight (LoS) is shown, wherein direct propagation of one or more signals occur e.g. from the shown radio node (e.g. access point 140-1, 140-2 of Fig. 1) and a respective mobile device (e.g. mobile device 130 of Fig. 1). In case a RTT measurement is based on such a LoS, the RTT measurement can be assumed to be correct and be of low uncertainty.

In Fig. 11b, a Non-Line-of-Sight (NLoS) is shown, wherein reflected propagation of one or more signals occur e.g. from the shown radio node (e.g. access point 140-1, 140-2 of Fig. 1) and a respective mobile device (e.g. mobile device 130 of Fig. 1). In case a RTT measurement is based on such a NLoS, the RTT measurement can be assumed to be too high and be of low uncertainty.

In Fig. 11c, a LoS in combination with NLoS is shown, wherein mixed components are comprised, thus, direct and reflected propagation of one or more signals occur e.g. from the shown radio node (e.g. access point 140-1, 140-2 of Fig. 1) and a respective mobile device (e.g. mobile device 130 of Fig. 1). In case a RTT measurement is based on such a LoS, the RTT measurement can be assumed to of high uncertainty.

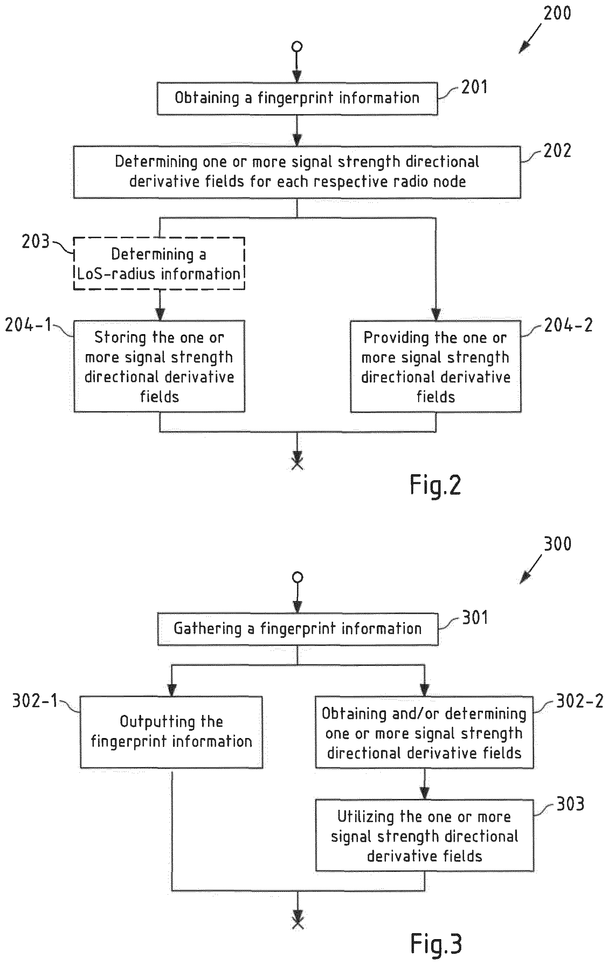

Fig. 2 is a flowchart 200 showing an example embodiment of a method according to the first exemplary aspect of the present invention. This flowchart 200 may for instance be performed by a server (e.g. server 110 of Fig. 1).

In a first step 201, a fingerprint information is obtained, e.g. by receiving said fingerprint information from a mobile device, or a radio node (e.g. mobile device 130, or radio node 140-1 or 140-2 of Fig. 1). In a second step 202, one or more signal strength directional derivative fields are determined, wherein a respective signal strength directional derivative field may for instance be determined for each radio node whose signal was observed when the fingerprint information was gathered (e.g. in step 301 of Fig. 3 performed by a mobile device, e.g. mobile device 130 of Fig. 1).

After steps 201 and 202 are performed, either step 204-1 or step 204-2 is performed as a third step. Of course, in example embodiments, both steps 204-1 and 204-2 may be performed, e.g. in any desired sequence, or in parallel. In an optional third step 203, a LoS information is determined.

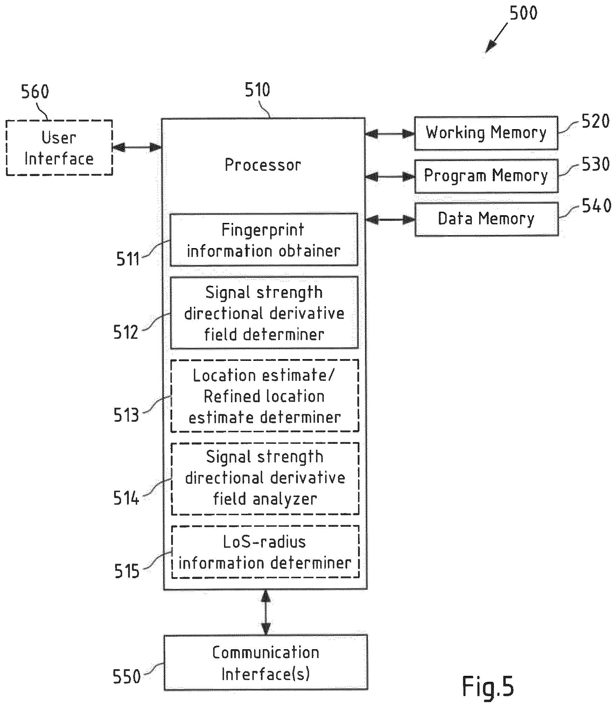

In a step 204-1, the one or more signal strength directional derivative fields are stored, e.g. in a memory that is comprised or connectable to the mobile device. Such a memory may for instance be data memory 540 of apparatus 500 of Fig. 5, which may for instance represent server performing the flowchart 200.

In a step 204-2, the one or more signal strength directional derivative fields are provided, e.g. by outputting the one or more signal strength directional derivative fields determined in step 202. For instance, a request may for instance be obtained (e.g. received), e.g. from one or more mobile devices (e.g. mobile device 130 of Fig. 1), wherein such one or more mobile devices may request to be provided with one or more signal strength directional derivative fields to be utilized in a positioning (see step 303 of flowchart 300 of Fig. 3). As a response to such a request, the one or more signal strength directional derivative field may for instance be provided, e.g. by outputting respectively sending the one or more signal strength directional derivative fields to the sender of the request. For instance, step 303 may for instance be performed after step 204-1 is performed, according to which the one or more determined signal strength directional derivative fields of step 202 are stored. In this way, e.g. in case a respective signal strength directional derivative field is determined for a certain radio node (e.g. of a plurality of radio nodes of an indoor positioning system, e.g. system 100 of Fig. 1), it may for instance be provided to multiple mobile devices (e.g. of the indoor positioning system) without the need to determine the respective signal strength directional derivative field every time again for the respective mobile device of the multiple devices. It will be understood that this may only apply in case a respective signal strength directional derivative field of a respective radio node that is utilized by the respective mobile device is the same radio node for which the respective signal strength directional derivative field was determined, previously. The flowchart 200 may for instance be performed multiple times.

Fig. 3 is a flowchart 300 showing an example embodiment of a method according to the second exemplary aspect of the present invention. This flowchart 300 may for instance be performed by a mobile device (e.g. mobile device 130 of Fig. 1).

In a first step 301, a fingerprint information is gathered (e.g. measured), e.g. by determining one or more identifiers and/or signal strength values and/or RTT measurement that are observable at a certain location.

After step 301 is performed, either step 302-1 or step 302-2 is performed as a third step. Of course, in example embodiments, both steps 204-1 and 204-2 may be performed, e.g. in any desired sequence, or in parallel.

In a step 302-1, the fingerprint information is output, e.g. by sending the fingerprint information to a recipient (e.g. server 110 of Fig. 1).

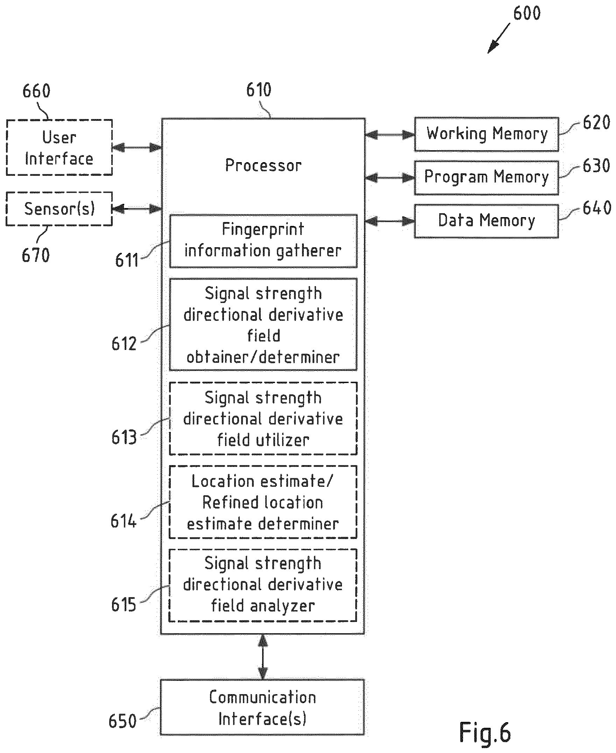

In a step 302-2, one or more signal strength directional derivative fields are obtained and/or determined, e.g. by receiving the one or more signal strength directional derivative fields, e.g. from a server (e.g. server 110 of Fig. 1), and/or determining the one or more signal strength directional derivative fields based at least partially on one or more pieces of fingerprint information that are obtained (e.g. received, e.g. from the apparatus performing the flowchart 200 of Fig. 2) prior to the determining. Additionally or alternatively, the one or more signal strength directional derivative fields, e.g. by retrieving the one or more signal strength directional derivative fields are obtained, e.g. from a memory in which such one or more signal strength directional derivative fields are stored. Such a memory may for instance be comprised by or connectable to the mobile device performing the flowchart 300, or it may for instance be a memory to which the mobile device has access to so that the one or more signal strength directional derivative fields can be obtained (e.g. retrieved) from this memory. For instance, the mobile device may for instance obtain one or more signal strength directional derivative fields in step 302-2, and then store the obtained one or more signal strength directional derivative fields in a memory (see e.g. data memory 640 of apparatus 600 of Fig. 6) comprised by or connectable to the mobile device. After the one or more signal strength directional derivative fields are stored in such a memory, the one or more signal strength directional derivative fields can be retrieved from this memory.

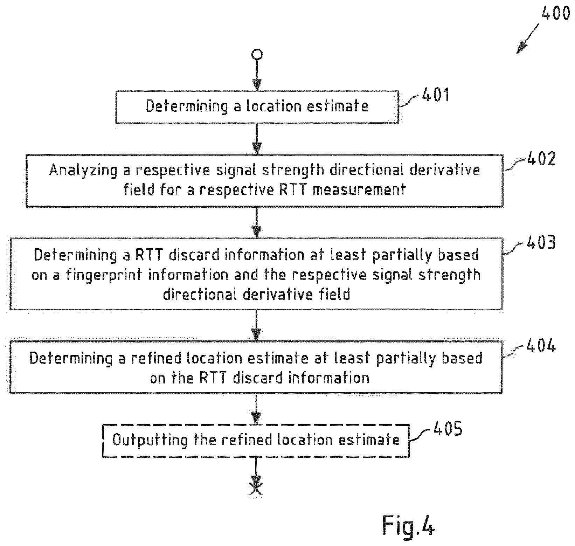

In a step 303, the one or more signal strength directional derivative fields (e.g. obtained in step 302-2) are utilized (e.g. in a positioning). Such utilization in a positioning may for instance be performing the flowchart 400 of Fig. 4 by the mobile device.

In particular, flowchart 200 of Fig. 2 and flowchart 300 of Fig. 3 may for instance be performed together by the system (e.g. system 100 of Fig. 1) according to the third exemplary aspect of the present invention. For instance, after steps 301(gathering of a fingerprint information) and step 302-1 (outputting the fingerprint information) are performed by the mobile device 130 of Fig. 1, the output fingerprint information may for instance be obtained (e.g. received) by the server 110 of Fig. 1 performing step 201 (obtaining of the fingerprint information). Then, e.g. step 204-2 is performed by the server, wherein one or more signal strength directional derivative fields determined in step 202 performed prior to the step 204-2, are provided, e.g. by outputting the one or more signal strength directional derivative fields. Those provided one or more signal strength directional derivative fields may for instance be obtained by the mobile device performing flowchart 300 of Fig. 3 in step 302-2. In this way, an interaction between the mobile device (e.g. mobile device 130 of Fig. 1) and the server (e.g. server 110 of Fig. 1) respectively performing the method according to the first and second exemplary aspect of the present invention is enabled.

Fig. 4 is a flowchart 400 showing an example embodiment of a method according to the first and/or second exemplary aspects of the present invention. This flowchart 400 may for instance be performed by a mobile device (e.g. mobile device 130 of Fig. 1), and/or may for instance be performed by a server (e.g. server 110 of Fig. 1). In particular, this flowchart 400 may for instance be performed in addition to the flowchart 200 of Fig. 2, e.g. by a respective server (e.g. server 110 of Fig. 1), and/or in addition to the flowchart 300 of Fig. 3, e.g. by a respective mobile device (e.g. mobile device 130 of Fig. 1).

In a first step 401, a location estimate is determined. The location estimate may for instance be determined at least partially based on a fingerprint information. Such a fingerprint information may for instance be obtained (e.g. received) in step 201 of Fig. 2, in case the flowchart 400 is performed by the respective server. Alternatively, such a fingerprint information may for instance be gathered in step 301 of Fig. 3, in case the flowchart 400 is performed by the respective mobile device. The fingerprint information may for instance comprise or represent one or more RTT measurements. Each respective RTT measurement of the one or more RTT measurements may for instance be gathered (e.g. measured) based on radio signals from one or more radio nodes, wherein the radio signals are observable at a certain location at which a respective mobile device is located when gathering the fingerprint information respective gathering the respective RTT measurement(s).

In a second step 402, a respective signal strength directional derivative field for each RTT measurement of one or more RTT measurement is analyzed. The one or more RTT measurement may for instance be comprised by a fingerprint information at least partially, wherein the fingerprint information is used as a basis to determine a location estimate in step 401. Such one or more signal strength directional derivative fields may for instance be determined in step 202 of Fig. 2, in case the flowchart 400 is performed by the respective server. Alternatively, such one or more signal strength directional derivative fields may for instance be obtained (e.g. received from a server, e.g. server 110 of Fig. 1) in step 302-2 of Fig. 3, in case the flowchart 400 is performed by the respective mobile device.

In a third step 403, a RTT discard information is determined. The RTT discard information is determined at least partially based on a fingerprint information and the respective signal strength directional derivative fields. Such a fingerprint information may for instance be obtained (e.g. received) in step 201 of Fig. 2, in case the flowchart 400 is performed by a server. Alternatively, such a fingerprint information may for instance be gathered in step 301 of Fig. 3, in case the flowchart 400 is performed by a mobile device. Such one or more signal strength directional derivative fields may for instance be determined in step 202 of Fig. 2, in case the flowchart 400 is performed by the respective server. Alternatively, such one or more signal strength directional derivative fields may for instance be obtained (e.g. received from a server, e.g. server 110 of Fig. 1) in step 302-2 of Fig. 3, in case the flowchart 400 is performed by the respective mobile device. The fingerprint information and/or the one or more signal strength directional derivative fields, each of which is a part of the basis for determining the RTT discard information, may for instance be the ones used in step 401 and/or 402 as well.

In a fifth step 404, a refined location estimate is determined. The refined location estimate is determined at least partially based on the RTT discard information of step 403, or optionally on the LoS-radius information of step 404.

In an optional sixth step 405, the refined location estimate (see step 404) is output. In case the flowchart 400 is performed by the respective server, the refined location estimate may for instance be output by sending the refined location estimate to a/the respective mobile device. Alternatively, the refined location estimate may for instance be output by sending the refined location estimate to an entity that is different from a/the respective mobile device, and which relays the refined location estimate to a/the respective mobile device. In case the flowchart 400 is performed by the respective mobile device, the refined location estimate may for instance be output by sending the refined location estimate to a/the respective server. Alternatively, the refined location estimate may for instance be output by sending the refined location estimate to an entity that is different from a/the respective server, and which relays the refined location estimate to a/the respective server.

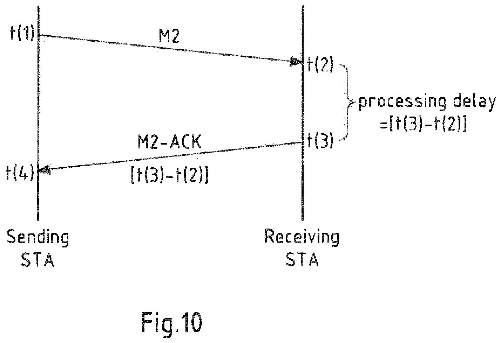

Fig. 10 shows a principle of a RTT measurement that is utilized in example embodiments according to all exemplary aspects of the present invention. Therein, a mobile device (e.g. mobile device 130 of Fig. 1; referred to as "sending STA" in Fig. 10, e.g. sending STAtion) sends a message M2 to a radio node (e.g. at least one of the radio nodes 140 of Fig. 1; e.g. an access point; referred to as "receiving STA" in Fig. 10, e.g. receiving STAtion). The access point responds after a delay d with the message M2-ACK (ACKnowledgement) carrying the "processing delay", e.g. d = t(3) - t(2), information. The distance between the mobile device and the access point may then be determined by c ^{∗} [t(4) - t(1) - d) 2, where c is the speed of light (c ≈ 300.000.000 m/s).

Fig. 5 is a schematic block diagram of an apparatus 500 according to an exemplary aspect of the present invention, which may for instance represent the server 110 of Fig. 1, and which may for instance be configured to perform and/or control flowchart 200 of Fig. 2. Apparatus 500 may for instance further be configured to perform flowchart 400 of Fig. 4.

Apparatus 500 comprises a processor 510, working memory 520, program memory 530, data memory 540, communication interface(s) 550, and an optional user interface 560.

Apparatus 500 may for instance be configured to perform or comprise respective means (at least one of 510 to 560) for performing the method according to the first exemplary aspect. Apparatus 500 may as well constitute an apparatus comprising at least one processor (510) and at least one memory (520) including computer program code, the at least one memory and the computer program code configured to, with the at least one processor, cause an apparatus, e.g. apparatus 500 at least to perform the method according to the first exemplary aspect of the invention.

Processor 510 may for instance comprise a fingerprint information obtainer 511 as a functional and/or structural unit. Fingerprint information obtainer 511 may for instance be configured to obtain a fingerprint information (see step 201 of Fig. 2).

Processor 510 may for instance comprise a signal strength directional derivative field determiner 512 as a functional and/or structural unit. Signal strength directional derivative field determiner 512 may for instance be configured to determine a signal strength directional derivative field (see step 202 of Fig. 2).

Processor 510 may for instance comprise an optional location estimate/refined location estimate determiner 513 as a functional and/or structural unit. Location estimate/refined location estimate determiner 513 may for instance be configured to determine a location estimate (see step 401 of Fig. 4), and/or to determine a refined location estimate (see step 404 of Fig. 4).

Processor 510 may for instance comprise an optional signal strength directional derivative field analyzer 514 as a functional and/or structural unit Signal strength directional derivative field analyzer 514 may for instance be configured to analyze a signal strength directional derivative field (see step 402 of Fig. 4).

Processor 510 may for instance comprise an optional LoS-radius information determiner 515 as a functional and/or structural unit LoS-radius information determiner 515 may for instance be configured to determine a LoS-radius information (see step 404 of Fig. 4).

Processor 510 may for instance further control the memories 520 to 540, the communication interface(s) 550, and the optional user interface 560.

Processor 510 may for instance execute computer program code stored in program memory 530, which may for instance represent a computer readable storage medium comprising program code that, when executed by processor 510, causes the processor 510 to perform the method according to the first exemplary aspect.

Processor 510 (and also any other processor mentioned in this specification) may be a processor of any suitable type. Processor 510 may comprise but is not limited to one or more microprocessor(s), one or more processor(s) with accompanying one or more digital signal processor(s), one or more processor(s) without accompanying digital signal processor(s), one or more special-purpose computer chips, one or more field-programmable gate array(s) (FPGA(s)), one or more controller(s), one or more application-specific integrated circuit(s) (ASIC(s)), or one or more computer(s). The relevant structure/hardware has been programmed in such a way to carry out the described function. Processor 510 may for instance be an application processor that runs an operating system.

Program memory 530 may also be included into processor 510. This memory may for instance be fixedly connected to processor 510, or be at least partially removable from processor 510, for instance in the form of a memory card or stick. Program memory 530 may for instance be non-volatile memory.

It may for instance be a FLASH memory (or a part thereof), any of a ROM, PROM, EPROM and EEPROM memory (or a part thereof) or a hard disc (or a part thereof), to name but a few examples. Program memory 530 may also comprise an operating system for processor 510. Program memory 530 may also comprise a firmware for apparatus 500.

Apparatus 500 comprises a working memory 520, for instance in the form of a volatile memory. It may for instance be a Random Access Memory (RAM) or Dynamic RAM (DRAM), to give but a few non-limiting examples. It may for instance be used by processor 510 when executing an operating system and/or computer program.

Data memory 540 may for instance be a non-volatile memory. It may for instance be a FLASH memory (or a part thereof), any of a ROM, PROM, EPROM and EEPROM memory (or a part thereof) or a hard disc (or a part thereof), to name but a few examples. Data memory 540 may for instance store one or more pieces of fingerprint information, one or more signal strength directional derivative fields, one or more location estimates, one or more refined location estimates, one or more pieces of LoS-radius information, one or more RTT measurements, one or more pieces of RTT discard information, or a combination thereof, to name but a few non-limiting examples.

Communication interface(s) 550 enable apparatus 500 to communicate with other entities, e.g. with mobile device 130 of Fig. 1, and/or with one or more radio nodes 140 of Fig. 1. The communication interface(s) 550 may for instance comprise a wireless interface, e.g. a cellular radio communication interface and/or a WLAN interface and/or a BT- or BLE interface), for instance to communicate with entities via the Internet.

User interface 560 is optional and may comprise a display for displaying information to a user and/or an input device (e.g. a keyboard, keypad, touchpad, mouse, etc.) for receiving information from a user. Some or all of the components of the apparatus 500 may for instance be connected via a bus. Some or all of the components of the apparatus 500 may for instance be combined into one or more modules.

Fig. 6 is a schematic block diagram of an apparatus 600 according to an exemplary aspect of the present invention, which may for instance represent the mobile device 130 of Fig. 1, and which may for instance be configured to perform and/or control flowchart 300 of Fig. 3. Apparatus 600 may for instance further be configured to perform flowchart 400 of Fig. 4.

Apparatus 600 comprises a processor 610, working memory 620, program memory 630, data memory 640, communication interface(s) 650, an optional user interface 660 and an optional sensor(s) 670.

Apparatus 600 may for instance be configured to perform or comprise respective means (at least one of 610 to 670) for performing the method according to the second exemplary aspect. Apparatus 600 may as well constitute an apparatus comprising at least one processor (610) and at least one memory (620) including computer program code, the at least one memory and the computer program code configured to, with the at least one processor, cause an apparatus, e.g. apparatus 600 at least to perform the method according to the second exemplary aspect of the invention.

Processor 610 may for instance comprise a fingerprint information gatherer 611 as a functional and/or structural unit. Fingerprint information gatherer 611 may for instance be configured to gather (e.g. measure) a fingerprint information (see step 301 of Fig. 3), and/or to gather (e.g. measure) one or more RTT measurements between apparatus 600 and one or more radio nodes (e.g. access points 140-1, 140-2 of Fig. 1).

Processor 610 may for instance comprise a signal strength directional derivative field obtainer/determiner 612 as a functional and/or structural unit. Signal strength directional derivative field obtainer/determiner 612 may for instance be configured to obtain (e.g. receive and/or retrieve) and/or determiner (e.g. calculate) one or more signal strength directional derivative fields (see step 302-2 of Fig. 3).

Processor 610 may for instance comprise an optional signal strength directional derivative field utilizer 613 as a functional and/or structural unit. Signal strength directional derivative field utilizer 613 may for instance be configured to utilize one or more signal strength directional derivative fields (see step 302-2 of Fig. 3) in a positioning (see step 303 of Fig. 3).

Processor 610 may for instance comprise an optional location estimate/refined location estimate determiner 614 as a functional and/or structural unit. Location estimate/refined location estimate determiner 614 may for instance be configured to determine a location estimate (see step 401 of Fig. 4), and/or to determine a refined location estimate (see step 404 of Fig. 4).

Processor 610 may for instance comprise an optional signal strength directional derivative field analyzer 615 as a functional and/or structural unit. Signal strength directional derivative field analyzer 615 may for instance be configured to analyze a signal strength directional derivative field (see step 402 of Fig. 4).

Processor 610 may for instance further control the memories 620 to 640, the communication interface(s) 650, the optional user interface 660 and the optional sensor(s) 670.

Processor 610 may for instance execute computer program code stored in program memory 630, which may for instance represent a computer readable storage medium comprising program code that, when executed by processor 610, causes the processor 610 to perform the method according to the second exemplary aspect.

Processor 610 (and also any other processor mentioned in this specification) may be a processor of any suitable type. Processor 610 may comprise but is not limited to one or more microprocessor(s), one or more processor(s) with accompanying one or more digital signal processor(s), one or more processor(s) without accompanying digital signal processor(s), one or more special-purpose computer chips, one or more field-programmable gate array(s) (FPGA(s)), one or more controller(s), one or more application-specific integrated circuit(s) (ASIC(s)), or one or more computer(s). The relevant structure/hardware has been programmed in such a way to carry out the described function. Processor 610 may for instance be an application processor that runs an operating system.

Program memory 630 may also be included into processor 610. This memory may for instance be fixedly connected to processor 610, or be at least partially removable from processor 610, for instance in the form of a memory card or stick. Program memory 630 may for instance be non-volatile memory. It may for instance be a FLASH memory (or a part thereof), any of a ROM, PROM, EPROM and EEPROM memory (or a part thereof) or a hard disc (or a part thereof), to name but a few examples. Program memory 630 may also comprise an operating system for processor 610. Program memory 630 may also comprise a firmware for apparatus 600.

Apparatus 600 comprises a working memory 620, for instance in the form of a volatile memory. It may for instance be a Random Access Memory (RAM) or Dynamic RAM (DRAM), to give but a few non-limiting examples. It may for instance be used by processor 610 when executing an operating system and/or computer program.

Data memory 640 may for instance be a non-volatile memory. It may for instance be a FLASH memory (or a part thereof), any of a ROM, PROM, EPROM and EEPROM memory (or a part thereof) or a hard disc (or a part thereof), to name but a few examples. Data memory 640 may for instance store one or more pieces of fingerprint information, one or more signal strength directional derivative fields, one or more location estimates, one or more refined location estimates, one or more pieces of LoS-radius information, one or more RTT measurements, one or more pieces of RTT discard information, or a combination thereof, to name but a few non-limiting examples.

Communication interface(s) 650 enable apparatus 600 to communicate with other entities, e.g. with server 110 and/or radio nodes 140 of Fig. 1. The communication interface(s) 650 may for instance comprise a wireless interface, e.g. a cellular radio communication interface and/or a WLAN interface and/or a BT- or BLE interface) and/or wire-bound interface, e.g. an IP-based interface, for instance to communicate with entities via the Internet.

User interface 660 is optional and may comprise a display for displaying information to a user and/or an input device (e.g. a keyboard, keypad, touchpad, mouse, etc.) for receiving information from a user.

Sensor(s) 670 are optional and may for instance comprise a GNSS (Global Navigation Satellite System), e.g. GPS (Global Positioning System), sensor, e.g. to gather a location information indicative of a location estimate determined based on signals of one or more satellites, and/or accelerometer to gather information indicative of a movement of the apparatus 600, to name but a few non-limiting examples.

Some or all of the components of the apparatus 600 may for instance be connected via a bus. Some or all of the components of the apparatus 600 may for instance be combined into one or more modules.

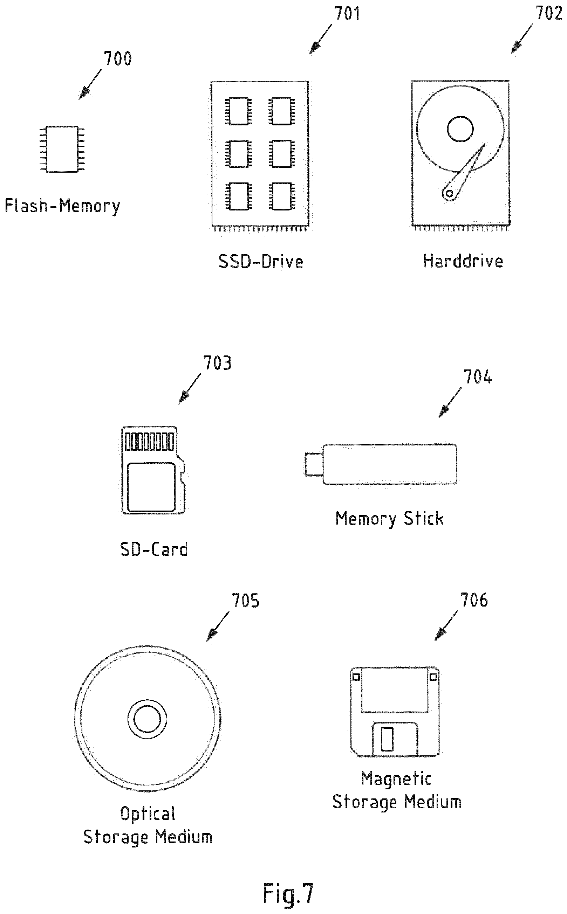

Fig. 7 is a schematic illustration of examples of tangible and non-transitory computer-readable storage media according to the present invention that may for instance be used to implement one or more of the memories 520, 530 of Fig. 5 and/or memories 620, 630 of Fig. 6. To this end, Fig. 7 displays a flash memory 700, which may for instance be soldered or bonded to a printed circuit board, a solid-state drive 701 comprising a plurality of memory chips (e.g. Flash memory chips), a magnetic hard drive 702, a Secure Digital (SD) card 703, a Universal Serial Bus (USB) memory stick 704, an optical storage medium 705 (such as for instance a CD-ROM or DVD) and a magnetic storage medium 706.

Any presented connection in the described embodiments is to be understood in a way that the involved components are operationally coupled. Thus, the connections can be direct or indirect with any number or combination of intervening elements, and there may be merely a functional relationship between the components.

Further, as used in this text, the term 'circuitry' refers to any of the following:
(a) hardware-only circuit implementations (such as implementations in only analog and/or digital circuitry)
(b) combinations of circuits and software (and/or firmware), such as: (1) to a combination of processor(s) or (2) to sections of processor(s)/ software (including digital signal processor(s)), software, and memory(ies) that work together to cause an apparatus, such as a mobile phone, to perform various functions) and
(c) to circuits, such as a microprocessor(s) or a section of a microprocessor(s), that re-quire software or firmware for operation, even if the software or firmware is not physically present.

This definition of 'circuitry' applies to all uses of this term in this text, including in any claims. As a further example, as used in this text, the term 'circuitry' also covers an implementation of merely a processor (or multiple processors) or section of a processor and its (or their) accompanying software and/or firmware. The term 'circuitry' also covers, for example, a baseband integrated circuit or applications processor integrated circuit for a mobile phone.

Any of the processors mentioned in this text, in particular but not limited to processors 310 of Fig. 3, could be a processor of any suitable type. Any processor may comprise but is not limited to one or more microprocessors, one or more processor(s) with accompanying digital signal processor(s), one or more processor(s) without accompanying digital signal processor(s), one or more special-purpose computer chips, one or more field-programmable gate arrays (FPGAS), one or more controllers, one or more application-specific integrated circuits (ASICS), or one or more computer(s). The relevant structure/hardware has been programmed in such a way to carry out the described function.

A method to detect possible non-line-of-sight RTT conditions for an access point using signal strength field and its derivatives, and if probable non-line-of-sight conditions are detected, discarding the RTT measurement for that access point or reducing its weight in the positioning solution is performed and/or controlled.

Fig. 11 a to c show three different possibilities, how a signal may propagate from an access point to a device:
- Line-of-sight (LoS) - direct propagation from the access point to the device; correct and low uncertainty RTT;
- Non-line-of-sight (NLoS) - reflection propagation from the access point to the device; too high and low uncertainty RTT;
- Los + Non-LoS - mixed components; high uncertainty RTT.

The first (Fig. 11 a) and the third case (Fig. 11 c) may for instance be considered to be easy. The first case is the clean one, and the third case typically leads to high measurement noise resulting in low weight in the positioning solution. Therefore, the solution according to the present invention is in particular related to the second case (Fig. 11 b), Non-LoS.

Detecting non-LoS propagation is typically difficult alone, because the measurements - though reflected
- look very good from the noise perspective, i.e. low noise. This is because the reflected signal typically still has high signal strength and does not get distorted by the mixing of the LoS & NLoS components. Therefore, detecting NLoS case without external information is challenging.

To detect a potential NLoS case, information on the building geometry needs to be deduced to analyze, if there is a risk of reflection. One option is to use indoor maps for this analysis (known in the art, thus not considered in the present invention). Another equally powerful option is to use the signal strength field to analyze the presence of reflecting obstacles. The signal strength field may originate from the manual data collection or crowd-sourcing.

Fig. 8a, and 8b respectively show an example, how the presence of a wall is projected to the signal strength field. A 7 m wall was been set parallel to y-axis symmetrically around y = 0 at the distance of x = 10 from the access point. The wall has been set to cause -15 dB attenuation. The attenuation caused by the piece of wall is clearly seen in the signal strength field.

In Fig. 8a, b the same signal strength field from two perspectives is illustrated. Fig. 8a shows the shadowing caused by a wall or a similar structure. Fig. 8b shows the actual field strength in dBm as the - 15 dB drop by the wall.

In the signal strength field such attenuation structures manifest themselves as high gradients. Fig. 9 shows the directional derivative field for the signal strength field in Fig. 8a, b. therefore, calculating the signal strength directional derivative field provides a straightforward way to understand, if there are potentially reflected surfaces in the area.

In Fig. 9, the directional derivative gradient (along a vector directed away from the access point) for the signal strength field in Fig. 8a, b is shown.

Usage in positioning:
The following features may for instance require that the signal strength directional derivative fields have been determined, e.g. pre-calculated (e.g. prior to performing and/or controlling one or more of the following aspects).
1) calculate the first location estimate using signal strengths and/or RTT measurements;
2) for each access point for which RTT was measured:
   - analyze the signal strength directional derivative field to see, if there are high gradient between the first location estimate and the access point:
      If no, trust the RTT;
      if yes, if there are enough trusted RTT measurements, discard the RTT; otherwise: set RTT large enough uncertainty to lower the weight in the solution;
3) use the non-discarded RTT measurements and their uncertainties to calculate the final location solution.

Alternatively, for each access point, the "radius of LoS" may for instance be computed, which may for instance be represented by a LoS-radius information. The "radius of LoS" may for instance be the radius of LoS around the access point location, where RTT measurements are accurate. The "radius of LoS" can be computed from the access point signal field with gradient method described above. For example, an access point located in a small room will have a small "radius of LoS" compared to another access point in a large hall.

The "radius of LoS" information (LoS-radius information) may for instance be stored, e.g. to a radio map, which a devices uses for supporting indoor positioning.

Example embodiments according to all aspects of the present invention enable a straightforward method to discard potentially wrong RTT measurements resulting in high location accuracy and low uncertainty.

In the present specification, any presented connection in the described embodiments is to be understood in a way that the involved components are operationally coupled. Thus, the connections can be direct or indirect with any number or combination of intervening elements, and there may be merely a functional relationship between the components.

Moreover, any of the methods, processes and actions described or illustrated herein may be implemented using executable instructions in a general-purpose or special-purpose processor and stored on a computer-readable storage medium (e.g., disk, memory, or the like) to be executed by such a processor. References to a 'computer-readable storage medium' should be understood to encompass specialized circuits such as FPGAs, ASICs, signal processing devices, and other devices.

The expression "A and/or B" is considered to comprise any one of the following three scenarios: (i) A, (ii) B, (iii) A and B. Furthermore, the article "a" is not to be understood as "one", i.e. use of the expression "an element" does not preclude that also further elements are present. The term "comprising" is to be understood in an open sense, i.e. in a way that an object that "comprises an element A" may also comprise further elements in addition to element A.

It will be understood that all presented embodiments are only exemplary, and that any feature presented for a particular example embodiment may be used with any aspect of the invention on its own or in combination with any feature presented for the same or another particular example embodiment and/or in combination with any other feature not mentioned. In particular, the example embodiments presented in this specification shall also be understood to be disclosed in all possible combinations with each other, as far as it is technically reasonable and the example embodiments are not alternatives with respect to each other. It will further be understood that any feature presented for an example embodiment in a particular category (method/apparatus/computer program/system) may also be used in a corresponding manner in an example embodiment of any other category. It should also be understood that presence of a feature in the presented example embodiments shall not necessarily mean that this feature forms an essential feature of the invention and cannot be omitted or substituted.

The statement of a feature comprises at least one of the subsequently enumerated features is not mandatory in the way that the feature comprises all subsequently enumerated features, or at least one feature of the plurality of the subsequently enumerated features. Also, a selection of the enumerated features in any combination or a selection of only one of the enumerated features is possible. The specific combination of all subsequently enumerated features may as well be considered. Also, a plurality of only one of the enumerated features may be possible.

The sequence of all method steps presented above is not mandatory, also alternative sequences may be possible. Nevertheless, the specific sequence of method steps exemplarily shown in the figures shall be considered as one possible sequence of method steps for the respective embodiment described by the respective figure.

The invention has been described above by means of example embodiments. It should be noted that there are alternative ways and variations which are obvious to a skilled person in the art and can be implemented without deviating from the scope of the appended claims.

## Claims

1. A method, comprising:
- determining (202) one or more signal strength directional derivative fields for each respective radio node (140-1, 140-2) of one or more radio nodes (140-1, 140-2), wherein a respective signal strength directional derivative field is determined at least partially based on one or more pieces of fingerprint information indicative of one or more radio signals sent by one or more radio nodes (140-1, 140-2) that are observable at a location at which the respective fingerprint information of the one or more pieces of fingerprint information was gathered, wherein each respective signal strength directional derivative field of the one or more signal strength directional derivative fields is indicative of enabling to determine if one or more signals transmitted between a respective radio node (140-1, 140-2) of the one or more radio nodes (140-1, 140-2) and at least one mobile device are reflected and/or propagated by multipath; and
- storing (204-1) the one or more signal strength directional derivative fields; and/or
- providing (204-2) the one or more signal strength directional derivative fields.

2. The method according to claim 1, further comprising:
- obtaining (201) a fingerprint information indicative of at least one or more radio signals sent by one or more radio nodes (140-1, 140-2) that are observable at a location at which the obtained fingerprint information was gathered, and/or indicative of at least one or more RTT measurements, wherein each RTT measurement of the one or more RTT measurements is indicative of a respective round-trip-time measurement of a first length of time a signal takes to be sent between a mobile device that gathered the obtained fingerprint information and a respective radio node (140-1, 140-2) and a second length of time a signal takes to be sent back and
- determining (403) a RTT discard information at least partially based on the obtained fingerprint information and the one or more signal strength directional derivative fields, wherein the RTT discard information is indicative of an uncertainty of the one or more RTT measurements, wherein each respective RTT measurement of the one or more RTT measurements is associated with the uncertainty, and further being indicative of whether or not the respective RTT measurement was measured based on a line-of-sight (LoS) RTT measurement; and
- utilizing the RTT discard information in a positioning.

3. The method according to claim 2, further comprising:
- determining (401) a location estimate;
- analyzing the respective signal strength directional derivative field for each RTT measurement of the one or more RTT measurements of fingerprint information,
wherein it is analyzed whether or not at least one high value of directed gradient exists that is located between the location estimate and the respective radio node (140-1, 140-2), and
in case such at least one high value does not exist:
- determining the RTT discard information to be indicative of the respective RTT measurement to be valid;
in case such at least one high value does exist:
- checking whether or not equal or more than a pre-defined number of valid RTT measurements are available for the respective radio nodes (140-1, 140-2); and
- determining the RTT discard information to be indicative of the respective RTT measurement being discarded in case the pre-defined number of valid RTT measurements is available, or else, to be indicative of the respective RTT measurement to be associated with a pre-defined uncertainty that is higher than a respective uncertainty that is associated with a valid RTT measurement; and
- determining (404) a refined location estimate at least partially based on the RTT discard information.

4. The method according to claim 2 or claim 3, wherein the RTT discard information is determined without considering further pieces of information.

5. The method according to any of the preceding claims, wherein the determining of the signal strength directional derivative fields further comprises:
- determining (402) one or more directional derivatives at least partially based on a signal strength field indicative of one or more received signal strength values at a respective location within a coverage area (150-1, 150-2) of a respective radio node (140-1, 140-2), wherein the one or more directional derivatives are determined with respect to a direction pointing away from the respective radio node (140-1, 140-2) of the one or more radio nodes (140-1, 140-2).

6. The method according to any of the claims 2 to 5, further comprising:
- determining a LoS-radius information indicative of a radius in which the respective radio node (140-1, 140-2) is located in its center and in which one or more RTT measurements are accurate, wherein the RTT discard information is determined further based on the LoS-radius information.

7. The method according to any of the preceding claims, wherein the determining of the signal strength directional derivative fields further comprises:
- determining a scalar field based on the one or more received signal strength values; and
- determining one or more directed gradients based on the scalar field.

8. The method according to any of the claims 2 to 7, wherein the determining of the signal strength directional derivative field further comprises:
if the respective directional derivative of the one or more signal strength directional derivative fields is above a certain threshold:
- setting the uncertainty of the respective RTT discard information to be higher compared to a RTT measurement which is equal to or not above the certain threshold.

9. The method according to any of the claims 2 to 8, further comprising:
- outputting the refined location estimate.

10. The method according to claim 1, further comprising:
- gathering (301) a fingerprint information indicative of one or more radio nodes (140-1, 140-2) that are observable at a location at which the fingerprint information is gathered, and/or indicative of at least one or more RTT measurements indicative of a respective round-trip-time measurement of a first length of time a signal takes to be sent between the at least one mobile device and a respective radio node (140-1, 140-2) and a second length of time a signal takes to be sent back; and
- outputting (302-1) the fingerprint information; and
- utilizing (303) the one or more obtained and/or determined signal strength directional derivative fields.

11. The method according to claim 10, further comprising:
- determining (403) a RTT discard information at least partially based on the fingerprint information and the one or more signal strength directional derivative fields, wherein the RTT discard information is indicative of an uncertainty of the one or more RTT measurements, wherein each respective RTT measurement of the one or more RTT measurements is associated with the uncertainty, and further being indicative of whether or not the respective RTT measurement was measured based on a line-of-sight (LoS) RTT measurement; and
- utilizing the RTT discard information in a positioning.

12. The method according to claim 10 or claim 11, wherein the method is performed by at least one mobile device.

13. An apparatus (110, 130, 500, 600) configured to perform or comprising respective means for performing the method of any of the claims 1 to 12.

14. A system (100), comprising:
- a first apparatus (110, 500) according to claim 13 configured to perform or comprising respective means for performing the method of any of the claims 1 to 9; and
- a second apparatus (130, 600) according to claim 13 configured to perform or comprising respective means for performing the method of any of the claims 10 to 12.

## Patentansprüche

1. Verfahren, umfassend:
- Bestimmen (202) eines oder mehrerer Signalstärken-Richtungsableitungsfelder für jeden jeweiligen Funkknoten (140-1, 140-2) von einem oder mehreren Funkknoten (140-1, 140-2), wobei ein jeweiliges Signalstärken-Richtungsableitungsfeld wenigstens teilweise basierend auf einem oder mehreren Teilen von Fingerabdruckinformationen, die indikativ für ein oder mehrere von dem einen oder den mehreren Funkknoten (140-1, 140-2) gesendeten Funksignale sind, die an einem Ort beobachtbar sind, an dem die jeweilige Fingerabdruckinformation der einen oder mehreren Teilen von Fingerabdruckinformationen erfasst wurde bestimmt wird,
wobei jedes jeweilige Signalstärken-Richtungsableitungsfeld des einen oder der mehreren Signalstärken-Richtungsableitungsfelder indikativ für ein Ermöglichen eines Bestimmens, ob ein oder mehrere zwischen einem jeweiligen Funkknoten (140-1,140-2) des einen oder der mehreren Funkknoten (140-1, 140-2) und zumindest einem mobilen Endgerät übertragener Signale reflektiert und/oder durch Mehrwegeausbreitung verbreitet werden; und
- Speichern (204-1) des einen oder der mehreren Signalstärken-Richtungsableitungsfelder; und/oder
- Bereiten (204-2) des einen oder der mehreren Signalstärken-Richtungsableitungsfelder.

2. Verfahren nach Anspruch 1, ferner umfassend:
- Erhalten (201) einer Fingerabdruckinformation indikativ für mindestens ein oder mehrere von einem oder mehreren Funkknoten (140-1, 140-2) gesendeten Funksignale, die an einem Ort beobachtbar sind, an dem die erhaltene Fingerabdruckinformation erfasst wurde, und/oder indikativ für mindestens eine oder mehrere RTT Messungen, wobei jede RTT-Messung der einen oder mehreren RTT Messungen indikativ für eine jeweilige Rundlaufzeitmessung einer ersten Zeitdauer, die ein Signal benötigt, um zwischen einem mobilen Endgerät, das die erhaltenen Fingerabdruckinformationen erfasst hat, und einem jeweiligen Funkknoten (140-1,140-2) gesendet zu werden, und einer zweiten Zeitdauer, die ein Signal benötigt, um zurückgesendet zu werden und
- Bestimmen (403) einer RTT Verwerfungsinformation mindestens teilweise basierend auf der erhaltenen Fingerabdruckinformation und dem einen oder der mehreren Signalstärken-Richtungsableitungsfelder, wobei die RTT Verwerfungsinformation indikativ für eine Unsicherheit der einen oder der mehreren RTT Messungen ist, wobei jede jeweilige RTT Messung der einen oder der mehreren RTT Messungen mit der Unsicherheit assoziiert ist, und ferner indikativ ist, ob die jeweilige RTT Messung basierend auf einer Sichtverbindung (Line-of-Sight, (LoS)) RTT Messung gemessen wurde; und
- Verwenden der RTT Verwerfungsinformation in einer Standortbestimmung.

3. Verfahren nach Anspruch 2, ferner umfassend:
- Bestimmen (401) einer Standortschätzung;
- Analysieren des jeweiligen Signalstärken-Richtungsableitungsfeldes für jede RTT Messung der einen oder mehreren RTT Messungen von Fingerabdruckinformationen,
wobei analysiert wird, ob mindestens ein hoher Wert eines gerichteten Gradienten existiert, der sich zwischen der Standortschätzung und dem jeweiligen Funkknoten (140-1, 140-2) befindet, und
für den Fall, dass es nicht mindestens einen solchen hohen Wert gibt:
- Bestimmen der RTT Verwerfungsinformation, so dass diese indikativ dafür ist, dass die jeweilige RTT Messung ist;
für den Fall, dass es mindestens einen solchen hohen Wert gibt:
- Prüfen, ob gleich oder mehr als eine vordefinierte Anzahl gültiger RTT Messungen für die jeweiligen Funkknoten (140-1, 140-2) verfügbar sind; und
- Bestimmen der RTT Verwerfungsinformation, so dass diese indikativ dafür ist, dass die jeweilige RTT Messung verworfen wird für den Fall, dass die vordefinierte Anzahl gültiger RTT Messungen verfügbar ist, oder andernfalls, dass die RTT Verwerfungsinformation dafür indikativ ist, dass die jeweilige RTT Messung mit einer vordefinierten Unsicherheit assoziiert ist, die höher ist als eine entsprechende Unsicherheit, die mit einer gültigen RTT Messung assoziiert ist; und
- Bestimmen (404) einer verfeinerten Standortschätzung mindestens teilweise basierend auf der RTT Verwerfungsinformation.

4. Verfahren nach Anspruch 2 oder 3, wobei die RTT Verwerfungsinformation bestimmt wird ohne weitere Teile von Informationen zu berücksichtigen.

5. Verfahren nach einem der vorhergehenden Ansprüche, wobei das Bestimmen der Signalstärken-Richtungsableitungsfelder ferner umfasst:
- Bestimmen (402) einer oder mehrerer Richtungsableitungen mindestens teilweise basierend auf einem Signalstärkefeld indikativ für einen oder mehrere empfangene Signalstärkewerte an einem jeweiligen Ort innerhalb eines Abdeckungsbereichs (150-1, 150-2) eines jeweiligen Funkknotens (140-1,140-2), wobei die eine oder mehreren Richtungsableitungen in Bezug auf eine Richtung bestimmt werden, die von dem jeweiligen Funkknoten (140-1, 140-2) des einen oder der mehreren Funkknoten (140-1,140-2) weg zeigt.

6. Verfahren nach einem der Ansprüche 2 bis 5, ferner umfassend:
- Bestimmen einer LoS-Radius-Information indikativ für einen Radius, in dessen Zentrum sich der jeweilige Funkknoten (140-1, 140-2) befindet und in dem eine oder mehrere RTT Messungen genau sind, wobei die RTT-Verwerfungsinformation ferner basierend auf der LoS-Radius-Information bestimmt wird.

7. Verfahren nach einem der vorhergehenden Ansprüche, wobei das Bestimmen der Signalstärken-Richtungsableitungsfelder ferner umfasst:
- Bestimmen eines Skalarfeldes basierend auf dem einen oder den mehreren empfangenen Signalstärkewerte; und
- Bestimmen eines oder mehrerer gerichteter Gradienten basierend auf dem Skalarfeld.

8. Verfahren nach einem der Ansprüche 2 bis 7, wobei das Bestimmen der Signalstärken-Richtungsableitungsfelder ferner umfasst:
für den Fall, dass die jeweilige Richtungsableitung des einen oder der mehreren Signalstärken-Richtungsableitungsfelder über einem bestimmten Schwellenwert liegt:
- Einstellen der Unsicherheit der jeweiligen RTT-Verwerfungsinformation, so dass diese höher ist im Vergleich zu einer RTT Messung, die dem bestimmten Schwellenwert entspricht oder diesen nicht überschreitet.

9. Verfahren nach einem der Ansprüche 2 bis 8, ferner umfassend:
- Ausgeben der verfeinerten Standortschätzung.

10. Verfahren nach Anspruch 1, ferner umfassend:
- Erfassen (301) einer Fingerabdruckinformation indikativ für einen oder mehrere Funkknoten (140-1, 140-2), die an einem Ort, an dem die Fingerabdruckinformation erfasst wird, beobachtbar ist, und/oder indikativ für mindestens eine oder mehrere RTT Messungen indikativ für eine jeweilige Rundlaufzeitmessung einer ersten Zeitdauer, die ein Signal benötigt, um zwischen dem mindestens einen mobilen Endgerät und einem jeweiligen Funkknoten (140-1, 140-2) gesendet zu werden und einer zweiten Zeitdauer, die ein Signal benötigt, um zurückgesendet zu werden; und
- Ausgeben (302-1) der Fingerabdruckinformation; und
- Verwenden (303) der einen oder mehreren erhaltenen und/oder bestimmten Signalstärken-Richtungsableitungsfelder.

11. Verfahren nach Anspruch. 10, ferner umfassend:
- Bestimmen (403) einer RTT-Verwerfungsinformation mindestens teilweise basierend auf der Fingerabdruckinformation und dem einen oder den mehreren Signalstärken-Richtungsableitungsfeldern, wobei die RTT-Verwerfungsinformation indikativ für eine Unsicherheit der einen oder mehreren RTT Messungen ist, wobei jede jeweilige RTT Messung der einen oder mehreren RTT Messungen mit der Unsicherheit assoziiert ist, und ferner indikativ dafür ist, ob die jeweilige RTT Messung basierend auf Sichtverbindung (Line-of-Sight, (LoS)) RTT Messung gemessen wurde; und
- Verwende der RTT-Verwerfungsinformation in einer Standortbestimmung.

12. Verfahren nach Anspruch 10 oder Anspruch 11, wobei das Verfahren von mindestens einem mobilen Endgerät ausgeführt wird.

13. Vorrichtung (110, 130, 500, 600), konfiguriert zum Ausführen oder umfassend jeweilige Mittel zu Ausführen des Verfahrens nach einem der Ansprüche 1 bis 12.

14. System (100), umfassend:
- eine erste Vorrichtung (110, 500) nach Anspruch 13, konfiguriert zum Ausführen oder umfassend jeweilige Mittel zum Ausführen des Verfahrens nach einem der Ansprüche 1 bis 9; und
- eine zweite Vorrichtung (130, 600) nach Anspruch 13, konfiguriert zum Ausführen oder umfassend jeweilige Mittel zum Ausführen des Verfahrens nach einem der Ansprüche 10 bis 12.

## Revendications

1. Un procédé, comprenant :
- la détermination (202) d'un ou plusieurs champs de dérivée directionnelle d'intensité de signal pour chaque noeud radio (140-1, 140-2) respectif d'un ou plusieurs noeuds radio (140-1, 140-2), dans lequel un champ de dérivée directionnelle d'intensité de signal respectif est déterminé au moins partiellement sur la base d'un ou plusieurs pièces d'information d'empreinte digitale indicatives d'un ou plusieurs signaux radio envoyés par un ou plusieurs noeuds radio (140-1, 140-2) qui sont observables à un emplacement auquel l'information d'empreinte digitale respective de l'un ou les plusieurs pièces d'information d'empreinte digitale a été recueillie, dans lequel chaque champ de dérivée directionnelle d'intensité de signal respectif de l'un ou les plusieurs champs de dérivée directionnelle d'intensité de signal est indicatif pour permettre de déterminer si un ou plusieurs signaux transmis entre un noeud radio (140-1, 140-2) respectif de l'un ou les plusieurs noeuds radio (140-1, 140-2) et au moins un dispositif mobile sont réfléchis et/ou propagés par trajets multiples ; et
- le stockage (204-1) de l'un ou les plusieurs champs de dérivée directionnelle d'intensité de signal ; et/ou
- la fournissage (204-2) de l'un ou les plusieurs champs de dérivée directionnelle d'intensité de signal.

2. Le procédé selon la revendication 1, comprenant en outre :
- l'obtention (201) d'une information d'empreinte digitale indicative d'au moins un ou plusieurs signaux radio envoyés par un ou plusieurs noeuds radio (140-1, 140-2) qui sont observables à un emplacement auquel l'information d'empreinte digitale obtenue a été recueillie, et/ou indicative d'au moins une ou plusieurs mesures RTT, dans lequel chaque mesure RTT de l'un ou les plusieurs mesures RTT est indicative d'une mesure de temps aller-retour respective d'une première durée d'envoi d'un signal entre un dispositif mobile qui a recueilli l'information d'empreinte digitale obtenue et un noeud radio (140-1, 140-2) respectif et d'une deuxième durée d'envoi en retour d'un signal et
- la détermination (403) d'un information d'écart RTT au moins partiellement sur la base de l'information d'empreinte digitale obtenue et l'un ou les plusieurs champs de dérivée directionnelle d'intensité de signal, dans lequel l'information d'écart RTT est indicative d'une incertitude de l'une ou les plusieurs mesures RTT, dans lequel chaque mesure RTT respective de l'une ou les plusieurs mesures RTT est associée à l'incertitude, et en outre étant indicative du fait que la mesure RTT respective a été mesurée ou non sur la base d'une mesure RTT en visibilité directe (LoS) ; et
- l'utilisation de l'information d'écart RTT dans un positionnement.

3. Le procédé selon la revendication 2, comprenant en outre :
- la détermination (401) d'une estimation d'emplacement ;
- l'analyse du champ de dérivée directionnelle d'intensité de signal respectif pour chaque mesure RTT de l'une ou les plusieurs mesures RTT d'information d'empreinte digitale,
dans lequel il est analysé si il existe ou non au moins une valeur élevée de gradient orienté qui est située entre l'estimation d'emplacement et le noeud radio (140-1, 140-2) respectif, et
dans le cas où cette au moins une valeur élevée n'existe pas :
- la détermination de l'information d'écart RTT à être indicative de la mesure RTT respective à être valide ;
dans le cas où cette au moins une valeur élevée existe :
- la vérification si un nombre égal ou supérieur à un nombre prédéfini de mesures RTT valides est disponible ou non pour les noeuds radio (140-1, 140-2) respectifs ; et
- la détermination de l'information d'écart RTT à être indicative de la mesure RTT respective étant écartée dans le cas où le nombre prédéfini de mesures RTT valides est disponible, ou sinon, à être indicative de la mesure RTT respective à être associée à une incertitude prédéfinie qui est supérieure à une incertitude respective qui est associée à une mesure RTT valide ; et
- la détermination (404) d'une estimation d'emplacement affinée au moins partiellement sur la base de l'information d'écart RTT.

4. Le procédé selon la revendication 2 ou la revendication 3, dans lequel l'information d'écart RTT est déterminée sans tenir compte d'autres pièces d'information.

5. Le procédé selon l'une quelconque des revendications précédentes, dans lequel la détermination des champs de dérivée directionnelle d'intensité de signal comprend en outre :
- la détermination (402) d'une ou plusieurs dérivées directionnelles au moins partiellement sur la base d'un champ d'intensité de signal indicatif d'une ou plusieurs valeurs d'intensité de signal reçues à un emplacement respectif à l'intérieur d'une zone de couverture (150-1, 150-2) d'un noeud radio (140-1, 140-2) respectif, dans lequel l'un ou les plusieurs dérivées directionnelles sont déterminées par rapport à une direction s'éloignant du noeud radio (140-1, 140-2) respectif de l'un ou les plusieurs noeuds radio (140-1,140-2).

6. Le procédé selon l'une quelconque des revendications 2 à 5, comprenant en outre :
- la détermination d'une information de rayon LoS indicative d'un rayon dans lequel le noeud radio (140-1, 140-2) respectif est situé en son centre et dans lequel une ou plusieurs mesures RTT sont précises, dans lequel l'information d'écart RTT est déterminée en outre sur la base de l'information de rayon LoS.

7. Procédé selon l'une quelconque des revendications précédentes, dans lequel la détermination des champs de dérivée directionnelle d'intensité de signal comprend en outre :
- la détermination d'un champ scalaire sur la base d'une ou plusieurs valeurs d'intensité de signal reçues ; et
- déterminer un ou plusieurs gradients dirigés sur la base du champ scalaire.

8. Le procédé selon l'une quelconque des revendications 2 à 7, dans lequel la détermination du champ de dérivée directionnelle d'intensité de signal comprend en outre :
si la dérivée directionnelle respective de l'un ou les plusieurs champs de dérivée directionnelle d'intensité de signal est supérieure à un certain seuil :
- la réglage de l'incertitude de l'information d'écart RTT respective pour qu'elle soit plus élevée par rapport à une mesure RTT qui est égale ou non supérieure au certain seuil.

9. Le procédé selon l'une quelconque des revendications 2 à 8, comprenant en outre :
- la sortie de l'estimation d'emplacement affinée.

10. Le procédé selon la revendication 1, comprenant en outre :
- le recueil (301) d'une information d'empreinte digitale indicative d'un ou plusieurs noeuds radio (140-1, 140-2) qui sont observables à un emplacement auquel l'information d'empreinte digitale est collectée, et/ou indicative d'au moins une ou plusieurs mesures RTT indicative d'une mesure de temps aller-retour respective d'une première durée d'envoi d'un signal entre l'au moins un dispositif mobile et un noeud radio (140-1, 140-2) respectif et d'une deuxième durée d'envoi en retour d'un signal ; et
- la sortie (302-1) de l'information d'empreinte digitale ; et
- l'utilisation (303) de l'un ou les plusieurs champs de dérivée directionnelle d'intensité de signal obtenus et/ou déterminés.

11. Le procédé selon la revendication 10, comprenant en outre :
- la détermination (403) d'une information d'écart RTT au moins partiellement sur la base de l'information d'empreinte digitale et l'un ou les plusieurs champs de dérivée directionnelle d'intensité de signal, dans lequel l'information d'écart RTT est indicative d'une incertitude de l'une ou les plusieurs mesures RTT, dans lequel chaque mesure RTT respective de l'une ou les plusieurs mesures RTT est associée à l'incertitude, et en outre étant indicative du fait que la mesure RTT respective a été mesurée ou non sur la base d'une mesure RTT en visibilité directe (LoS) ; et
- l'utilisation de l'information d'écart RTT dans un positionnement.

12. Le procédé selon la revendication 10 ou la revendication 11, dans lequel le procédé est exécuté par au moins un dispositif mobile.

13. Un appareil (110,130, 500, 600) configuré pour exécuter ou comprenant des moyens respectifs pour exécuter le procédé de l'une quelconque des revendications 1 à 12.

14. Un système (100), comprenant :
- un premier appareil (110, 500) selon la revendication 13 configuré pour exécuter ou comprenant des moyens respectifs pour exécuter le procédé de l'une quelconque des revendications 1 à 9 ; et
- un deuxième appareil (130,600) selon la revendication 13 configuré pour exécuter ou comprenant des moyens respectifs pour exécuter le procédé de l'une quelconque des revendications 10 à 12.
